# EUROPÄISCHE PATENTANMELDUNG

(11) **EP 4 357 044 A1**
(43) Veröffentlichungstag der Anmeldung: **24.04.2024**
(21) Anmeldenummer: 22203035.5
(22) Anmeldetag: 21.10.2022
(51) Int. Cl.: B21D 43/11, B65H 20/18, B21C 47/34, F16C 29/00, F16C 29/06

(54) **MODULARER VORSCHUB**

(71) Anmelder: Zehnder & Sommer AG, 3400 Burgdorf (CH)
(72) Erfinder: LOHNER, Erich, 3400 Burgdorf (CH); FANKHAUSER, Urs, 3400 Burgdorf (CH)
(74) Vertreter: Bardehle Pagenberg Partnerschaft mbB Patentanwälte Rechtsanwälte

(57) **Zusammenfassung**

Die vorliegende Erfindung betrifft einen Vorschub zur Förderung von einem Werkstück, insbesondere Bandmaterial, in einer Förderrichtung, umfassend: mindestens ein erstes Paar Seitentragmodule; ein Grundtragmodul, das zwischen den Seitentragmodulen angeordnet ist; und mindestens ein Fördermodul; wobei die Seitentragmodule mit dem Grundtragmodul quer zur Förderrichtung lösbar verbunden sind, um eine U-förmige Tragstruktur des Vorschubs entlang der Förderrichtung auszubilden; wobei das Fördermodul in Förderrichtung bewegbar auf der Tragstruktur angeordnet ist.

## Beschreibung

### 1. Technisches Gebiet

Die vorliegende Erfindung betrifft einen Vorschub, insbesondere einen modular aufgebauten Vorschub, zur Förderung von einem Werkstück wie zum Beispiel Bandmaterial. Der Vorschub umfasst Seitentragmodule und ein Grundtragmodul, die so eingerichtet sind, dass Vorschübe für unterschiedliche Vorschubanwendungen gebildet werden können.

### 2. Stand der Technik

Materialfördervorrichtungen, insbesondere Vorschübe wie beispielsweise Zangenvorschübe oder Walzenvorschübe, werden zum Fördern und Vorschieben, insbesondere zum getakteten Vorschieben von Werkstücken, wie Bandmaterial oder Streifenmaterial, eingesetzt. Beispielhaft kommen Zangenvorschübe oder Walzenvorschübe bei Folgeschnittwerkzeugen, wie Stanzanwendung zum Einsatz. Das Werkstück wird hierbei getaktet vorgeschoben, wobei die Taktung des Vorschubs mit einem Stanzwerkzeug synchronisiert ist.

Das Prinzip des Vorschubs soll beispielhaft an einem Bandmaterial im Zangenvorschub veranschaulicht werden: Der Zangenvorschub kann eine fixe Zange und eine bewegliche Zange umfassen. Das stehende Bandmaterial wird von der fixen Zange gehalten bzw. geklemmt. Die bewegliche Zange befindet sich in einer Startposition. Durch ein Steuersignal, zumeist von einem Folgeschnittwerkzeug initiiert, klemmt die bewegliche Zange nun das Bandmaterial und gleichzeitig löst die fixe Zange die Klemmung ("Loslassen"). Anschließend führt die bewegliche Zange eine lineare Vorschubbewegung bis zu einer Endposition aus. Die Vorschubbewegung kann von einer Steuerung vorgegeben sein. Bei Erreichen der Endposition klemmt wieder die fixe Zange das Bandmaterial und die bewegliche Zange löst die Klemmung. Anschließend führt die bewegliche Zange eine lineare Bewegung in die Startposition zurück. Der zuvor beschriebene Ablauf kann auch als ein Zyklus oder Vorschubzyklus bezeichnet werden. Der Vorschubzyklus wird so oft wiederholt, wie eine Steuerung ein Startsignal erhält.

Ein Zangenvorschub umfasst außerdem einen Grundkörper (oder auch Tragstruktur genannt), der dem Vorschub Stabilität verleiht und bewegliche Komponenten und/oder Antriebseinheiten aufnehmen kann. Üblicherweise bewegt sich die bewegliche Zange entlang einer Längsrichtung des Grundkörpers.

An einen Vorschub, beispielsweise einen Zangenvorschub werden einige Anforderungen gestellt. So soll die Herstellung und Beschaffung des Vorschubs vereinfacht und kostengünstig sein. Insbesondere soll die Fertigung der Bauteile des Vorschubs kostengünstig erfolgen. Zudem sollen Vorschübe flexibel umgebaut und/oder angepasst werden können, um verschiedene Einsatzbereiche abzudecken. Beispielsweise sollen verschiedene Einsatzbereiche/Anforderungen wie Vorschublängen, Vorschubbreiten, Anpresskräften (zum Halten des Bildmaterials), Vorschubzyklen pro Zeiteinheit (Taktrate, somit Beschleunigungen der beweglichen Bauteile) bedient werden können. Auch sollten Bauteilabmessungen der Vorschübe aufgrund von Platzbeschränkungen in Werkshallen reduziert werden.

Diesem Anforderungsprofil werden herkömmliche Vorschübe nicht gerecht. Herkömmliche Vorschübe weisen beispielsweise integrale und sperrige Bauteile auf, wobei die Bauteile lediglich für einen Zweck, eine Montageorientierung und eine Montagposition ausgelegt sind. Folglich sind herkömmliche Vorschübe auf einen bestimmten Einsatzbereich limitiert. Für einen andersartigen Einsatzbereich muss ein gänzlich anderer und neuer Vorschub beschaffen werden. Diese Vorschübe sind folglich in der Gesamtbetrachtung sehr ineffizient. Bei einer Beschädigung eines Bauteils, ist die Beschaffung eines Ersatzbauteils zumeist kosten- und zeitintensiv

Eine Aufgabe der vorliegenden Erfindung ist es daher, die Nachteile des Stands der Technik zu überwinden. Insbesondere widmet sich die vorliegende Erfindung der Aufgabe, einen Vorschub zur Förderung von einem Werkstück bereitzustellen, welcher modular ist und flexibel auf verschiedene Einsatzbereiche modifizierbar ist. Die Modifikation soll kosteneffizient erfolgen können. Es ist ferner eine Aufgabe der Erfindung Module/Bauteile für einen Vorschub bereitzustellen, sodass eine einfache Modifikation effizient ermöglicht wird. Zudem soll ein baulich kompakter Vorschub bereitgestellt werden. Insbesondere soll die Förderung von Bandmaterial sicher, wenig störanfällig und schnell erfolgen.

### 3. Zusammenfassung der Erfindung

Die obigen Aufgaben sowie weitere Aufgaben, die sich aus der folgenden Beschreibung ergeben, werden durch den Gegenstand der unabhängigen Ansprüche gelöst. Bevorzugte Ausführungsformen sind Gegenstand der abhängigen Ansprüche, und der Fachmann findet Hinweise auf andere geeignete Ausführungsformen der vorliegenden Erfindung in der Offenbarung der vorliegenden Anmeldung.

**Eine 1. Ausführungsform** der Erfindung betrifft einen Vorschub zur Förderung von einem Werkstück, insbesondere Bandmaterial, in einer Förderrichtung, umfassend: mindestens ein erstes Paar Seitentragmodule; ein Grundtragmodul, das zwischen den Seitentragmodulen angeordnet ist; und mindestens ein Fördermodul; wobei die Seitentragmodule mit dem Grundtragmodul quer zur Förderrichtung lösbar verbunden sind, um eine U-förmige Tragstruktur des Vorschubs entlang der Förderrichtung auszubilden; wobei das Fördermodul in Förderrichtung bewegbar auf der Tragstruktur angeordnet ist.

Der erfindungsgemäße Vorschub (auch ohne Einschränkung und lediglich zur Verdeutlich als "modularer" Vorschub bezeichnet) umfasst Bauteile, die es ermöglichen, auf flexible Weise Vorschübe für verschiedene Anforderungen bereitzustellen. Der Vorschub lässt sich vereinfacht aufrüsten, umbauen und/oder in der Konstruktion ändern.

Die verwendeten Bauteile sind modular ausgeführt und können Montagemittel/Stirnflächen umfassen, die universell, standardisiert und/oder zueinander kongruent sind. Folglich wird ein flexibler Zusammenbau der Bauteile zu einem Vorschub ermöglicht. Dies spart Kosten und trägt zu einem vergünstigten Zusammenbau eines Vorschubs bei.

Die Anforderungen der Vorschübe können einen maximalen Installationsraum umfassen. Für diese Anforderung ermöglicht der erfindungsgemäße Vorschub einen flexiblen Umbau eines bestehenden Vorschubs unter Verwendung dergleichen Bauteile. Sodann kann ein Vorschub gebildet werden, der einen anderen Bauraum einnimmt (beispielsweise eine veränderte/geringere geometrische Abmessung wie Breite/Höhe/Länge).

Die Bauteile des Vorschubs können in einer Vielzahl und insbesondere in einer größeren Stückzahl hergestellt werden. Die Produktion dieser Bauteile kann auf die erhöhte Stückzahl hin optimiert werden, wodurch die Herstellung effizienter gestaltet werden kann.

Als "Bauteile" des Vorschubs können die hierin beschriebenen Module verstanden werden. Ein Seitentragmodul und ein Grundtragmodul sind hierin jedoch als ein jeweils (einziges) integrales Bauteil zu verstehen. Die hierin beschriebenen Seitentragmodule können insbesondere gleichartig, bzw. einheitlich sein. Ein "Paar Seitentragmodule" kann so verstanden werden, dass sich die zwei Seitentragmodule im Verbund mit dem Grundtragmodul als Tragstruktur nicht berühren.

Ein Fördermodul kann, wie hierin beschrieben, mehrere Bauteile umfassen.

Das mit dem Vorschub geförderte Bandmaterial könnte beispielsweise zur Herstellung von Komponenten oder Präzisionsteilen zahlreicher Industriesektoren umfassend die Sektoren Automobil, Elektrik- und Elektronik, Haushaltswaren, Kosmetik, Sprühdosen, Medizintechnik oder Elektrobleche verwendet werden.

Der Vorschub kann dazu eingerichtet sein, Bandmaterial in zwei verschiedene Richtungen, vorzugsweise in zwei entgegengesetzte Richtungen, zu fördern. So kann beispielsweise ein einfacher Wechsel von der Anordnung von Bauteilen durchgeführt werden, um eine Richtung zu ändern. Beispielsweise kann eine Auflageplatte des Vorschubs (wodurch Bandmaterial eingeführt werden kann) auf der einen und auf der anderen Seite entlang der Förderrichtung montiert werden. In einem weiteren Beispiel kann eine Endplatte des Vorschubs an einem beliebigen Ende der Tragstruktur des Vorschubs montiert werden.

Es ist auch möglich, eine Vielzahl an Halterungsvorrichtungen vorzusehen (beispielsweise auf dem bewegbaren Fördermodul). Die Haltevorrichtungen können in Eingriff mit Bandmaterial kommen. Folglich kann bei Bedarf die Anpresskraft auf ein Bandmaterial erhöht werden. Auf diese Weise ist es möglich das Bandmaterial in vergrößertem Maße zu beschleunigen. Dies trägt zu einer Erhöhung des Durchsatzes von Bandmaterial bei und macht die Anwendung des Vorschubs effizient. Die Anzahl der Halterungsvorrichtungen kann z.B. anhand verschiedener Dicken des Bandmaterials flexibel eingestellt werden, um eine gewünschte Taktrate zu gewährleisten. Dies sorgt für eine insgesamt effizientere Bearbeitung von Bandmaterial im Vorschub, insbesondere in Vorschüben mit Folgeschnittwerkzeugen.

Den herkömmlichen Vorschüben ermangelt es an solchen Vorteilen, da herkömmliche Vorschübe auf einen Anwendungsfall beschränkt sind und lediglich dafür ausgelegt sind. Herkömmliche Bauteile herkömmlicher Vorschübe sind nicht modular ausgeführt und weisen keine standardisierten Montagemittel und/oder keine Symmetrien auf, die einen flexiblen Zusammenbau und Umbau ermöglichen.

Die Tragstruktur des erfindungsgemäßen Vorschubs kann sich aus drei Modulen zusammensetzen. Dies kann so verstanden werden, dass die Tragstruktur geteilt (in Bauteile eingeteilt) ausgeführt ist. Die Tragstruktur des Vorschubs ist so zu verstehen, dass sie eine ausreichende Stabilität bietet, um den Vorschub betreiben zu können. Beispielsweise können somit Bewegungen und Belastungen durch das Fördermodul aufgenommen werden. Ferner kann die Tragstruktur weitere Bauteile des Vorschubs aufnehmen (z.B. eine Antriebseinheit, Magnetschienen, eine Wagenplatte, bewegliche Haltevorrichtungen) und diesen weiteren Bauteilen Stabilität bieten. Ohne eine solche Tragstruktur wäre dies nicht möglich.

Herkömmliche Tragstrukturen sind integral, mithin einteilig, ausgeführt. Aus Stabilitätsgründen ist eine Einteilung in einzelne Bauteile der Tragstrukturen bei herkömmlichen Vorschüben bisher nicht vorgesehen. Zudem ist keine Aneinanderreihung von herkömmlichen Tragstrukturen möglich.

Vorteilhaft kann die erfindungsgemäße (geteilt ausgeführte jedoch lösbar verbindbare) Tragstruktur in beliebiger Weise für Vorschübe verschiedener Anwendungen und/oder Anforderungen eingesetzt werden. Beispielsweise können das gleiche erste Paar an Seitentragmodulen bei Vorschübe einer anderen Breite, bspw. für die Anwendung einer anderen Bandmaterialbreite eingesetzt werden.

Die U-förmige Tragstruktur kann so verstanden werden, dass ein Profil im Querschnitt der Tragstruktur rechtwinklig zur Förderrichtung (Längsrichtung der Tragstruktur) im Wesentlichen ein U nachbildet. Dabei kann das "U" eckig gestaltet sein und es können kleinere Abweichungen von einem gewöhnlichen "U" umfasst sein.

**Eine 2. Ausführungsform** betrifft die vorhergehende Ausführungsform, wobei die Seitentragmodule gegeneinander austauschbar mit dem Grundtragmodul lösbar verbunden werden können.

Mit dieser Ausführungsform kann die Modularität erhöht und eine flexible Anwendbarkeit der Bauteile ermöglicht werden. Es können beispielsweise einzelne Bauteile beliebig ausgetauscht werden, sofern diese beschädigt werden (beispielsweise im Betrieb des Vorschubs). Dies bedarf keiner weitreichenden Änderung anderer Bauteile. Folglich bleibt der unbeschädigte Teil des Vorschubs unverändert, wodurch die Kosten reduziert werden können.

Die Seitentragmodule können, in einem Beispiel, auch auf Vorrat beschaffen/produziert werden, womit und aufgrund der erhöhten Stückzahl eine Kostenersparnis einhergeht. Gegenüber eines Austausch einer gesamten Tragstruktur ist es so möglich, gezielt und effizient einen Austausch vornehmen zu können.

Es ist von Vorteil, dass ein Bauteil eines Vorschubs durch ein anderes Bauteil desselben Vorschubs ersetzt werden kann. Dies könnte beispielsweise sinnvoll sein, wenn der Vorschub einseitig einer größeren Belastung ausgesetzt ist. Folglich kann ein Umbau/Austausch untereinander der Bauteile erfolgen sodass insgesamt eine gleichmäßigere Materialbelastung gewährleistet werden kann. Dies erhöht die Lebensdauer des Vorschubs gegenüber herkömmlichen Vorschüben.

**Eine 3. Ausführungsform** betrifft eine der vorhergehenden Ausführungsformen, wobei der Vorschub so eingerichtet ist, dass das Fördermodul bei einem gegenseitigen Austausch der Seitentragmodule weiterhin in Förderrichtung bewegbar auf der Tragstruktur angeordnet werden kann.

Dies bietet den Vorteil, dass der Austausch der Seitentragmodule einen Betrieb des Vorschubs nicht behindern. Mithin kann der gleiche Vorschub weiterhin betrieben werden.

**Eine 4. Ausführungsform** betrifft eine der vorhergehenden Ausführungsformen, wobei die Seitentragmodule erste Montagemittel zur lösbaren Verbindung mit dem Grundtragmodul aufweisen.

Die lösbare Verbindung bietet den Vorteil des vereinfachten Aus-/Umbaus und/oder der vereinfachten Erweiterung des Vorschubs. Mithin wird ein flexibler Zusammenbau der Bauteile zu einem Vorschub ermöglicht.

**Eine 5. Ausführungsform** betrifft eine der vorhergehenden Ausführungsformen, wobei die Seitentragmodule Stirnflächen aufweisen, die so eingerichtet sind, dass ein weiteres Paar gleichartiger Seitentragmodule in Förderrichtung an das erste Paar Seitentragmodule so angeordnet werden kann, dass die Länge der Tragstruktur um die Länge eines Seitentragemodul verlängert wird, wenn das Grundtragmodul durch ein verlängertes Grundtragmodul ersetzt wird, dessen Länge um die Länge eines Seitentragmoduls größer ist als die Länge des Grundtragmoduls.

Es ist von Vorteil, dass das weitere Paar ebenso gleichartig ist. Dies trägt zum effizienten Einsatz einer Mehrzahl gleicher Bauteile bei. In einem Beispiel können die Paare Seitentragmodule so angeordnet werden, dass sich im Wesentlichen zwei Reihen bilden, wobei zwischen den Reihen das Grundtragmodul angeordnet ist. Das Grundtragmodul braucht lediglich länger ausgeführt werden folglich kann, in einem Beispiel eine doppelt so lange Tragstruktur erzielt werden (bei drei Paaren zum Beispiel eine dreimal so lange Tragstruktur wie bei einem Paar).

In einem Beispiel ist es ebenfalls möglich, dass das Grundtragmodul breiter ausgeführt wird. Dabei können weiterhin die gleichen Seitentragmodule verwendet werden.

**Eine 6. Ausführungsform** betrifft eine der vorhergehenden Ausführungsformen, wobei der Vorschub so eingerichtet ist, dass bei einer Anordnung eines weiteres Paars gleichartiger Seitentragmodule in Förderrichtung das Fördermodul weiterhin in Förderrichtung bewegbar auf der Tragstruktur angeordnet werden kann.

Es gelten zumindest die Ausführungen und Vorteile zur 3. Ausführungsform.

**Eine 7. Ausführungsform** betrifft eine der vorhergehenden Ausführungsformen, wobei die Seitentragmodule und das Grundtragmodul so eingerichtet sind, dass bei einer Anordnung eines weiteres Paars gleichartiger Seitentragmodule in Förderrichtung die weiteren gleichartigen Seitentragmodule mit dem verlängerten Grundtragmodul quer zur Förderrichtung lösbar verbunden werden können, um die Tragstruktur des Vorschubs entlang der Förderrichtung ausbilden zu können.

Die lösbare Verbindung erhöht die Einsatzfähigkeit der verwendeten Bauteile. Die Verbindung quer zur Förderrichtung bietet ausreichend Stabilität, sodass die gebildete Tragstruktur den Belastungen des Vorschubs beim Betrieb standhalten kann. Folglich kann der Vorschub im Wesentlichen sicher aufgenommen werden.

**Eine 8. Ausführungsform** betrifft eine der vorhergehenden Ausführungsformen, wobei die Stirnflächen der Seitentragmodule zueinander kongruent sind, sodass bei einer Anordnung eines weiteres Paars gleichartiger Seitentragmodule, die Stirnflächen zumindest zum Teil bündig aneinander anstoßen.

Zueinander kongruent kann bedeuten, dass die sich die Flächen recht ähnlich sind und eine passende Form zueinander aufweisen. Somit kann, in einem Beispiel, ein kontinuierlicher Übergang von einem Seitentragmodul zu einem weiteren Seitentragmodul entlang einer Reihe von Seitentragmodulen ermöglicht werden.

**Eine 9. Ausführungsform** betrifft eine der vorhergehenden Ausführungsformen, wobei die Stirnflächen der Seitentragmodule Aussparungen, vorzugsweise U-förmige Aussparungen aufweisen, wobei bei einer Anordnung eines weiteres Paars gleichartiger Seitentragmodule, die Aussparungen eine gemeinsame Öffnung bilden mit einer im Wesentlichen kontinuierlichen Umfangsfläche.

Dies bietet den Vorteil, dass die Zugänglichkeit bei einem Zusammenbau des Vorschubs verbessert wird. Insbesondere ist so der Innenbereich der Tragstruktur über die Außenseiten für Kabel und/oder Schläuche (z.B. Pneumatik-Schläuche), oder ähnliches zugänglich. Folglich können die Kabel und/oder Schläuche bereits an beiden Enden angeschlossen werden, und anschließend seitlich durch die Aussparung eingelegt werden. Somit können die Kabel und/oder Schläuche bereits vorkonfektioniert werden.

In einem Beispiel bedeuten die "Aussparungen", dass eine Stirnfläche eine Aussparung aufweist, die andere Stirnfläche entsprechend ebenfalls eine Aussparung.

Die Stirnflächen können als die zwei an in Längsrichtung eines Seitentragmoduls entgegengesetzten Enden angeordneten Flächen eines Seitentragmoduls verstanden werden. Mithin sind die Stirnflächen normal zur Förderrichtung orientiert und parallel zueinander.

In einem Beispiel kann die Aussparung an einer Stirnfläche in Längsrichtung länger sein als die Aussparung an der anderen Stirnfläche in Längsrichtung. Dies kann von Vorteil sein, da somit an einer Außenseite des Seitentragmoduls zur Seite mit der kürzeren Aussparung hin in Längsrichtung mehr Gewindebohrungen zur Aufnahme eines Sensors vorgesehen werden können. Weiterhin wird flexibel ausreichend Zugang für Kabel und/oder Schläuche bereitgestellt.

In einem Beispiel sind die Schenkel der U-förmige Aussparungen parallel zur Förderrichtung angeordnet sind.

Eine im Wesentlichen kontinuierlichen Umfangsfläche kann zum Beispiel bedeuten, dass es keine starken und/oder merkliche Kanten gibt. Mithin sind aber Fertigungstoleranzen umfasst und sollten berücksichtigt werden, sodass es in manchen Fällen zu Kanten kommen kann.

**Eine 10. Ausführungsform** betrifft die vorhergehende Ausführungsform, wobei die Stirnflächen der Seitentragmodule zweite Montagemittel aufweisen, die so eingerichtet sind, dass die Seitentragmodule mit einer Endplatte des Vorschubs lösbar verbunden werden können.

Die hierin beschriebenen ersten und zweiten Montagemittel können Befestigungslöcher umfassen. Vorteilhaft ist es sodann möglich, die Stirnflächen der Seitentragmodule längs aneinander zu reihen, wobei zudem eine Befestigung der Seitentragmodule mit der Endplatte möglich ist. Die Stirnflächen erfüllen somit zwei Funktionen, wodurch die Flexibilität erhöht wird. Herkömmliche Stirnflächen sind lediglich für eine Funktion ausgelegt.

In einem Beispiel sind, im erfindungsgemäßen Vorschub, zumindest die Stirnflächen an einer Seite des ersten Paars von Seitentragmodulen mit der Endplatte lösbar verbunden. Diese Stirnflächen sind als die beiden Stirnflächen der beiden Seitentragmodule des ersten Paars von Seitentragmodulen zu verstehen. Diese beiden Stirnflächen können auf einer gemeinsamen Ebene liegen. An der anderen Seite des ersten Paars von Seitentragmodulen kann auch eine Endplatte (eine zweite, gleichartige) befestigt sein. Es kann jedoch auch ein zweites Paar Seitentragmodule an der anderen Seite des ersten Paars von Seitentragmodulen angeordnet sein.

**Eine 11. Ausführungsform** betrifft eine der vorhergehenden Ausführungsformen, wobei das Grundtragmodul erste Montagemittel an beiden quer zur Förderrichtung angeordneten Seiten aufweist, die, optional, zur kraftschlüssigen Verbindung zu den ersten Montagemitteln der Seitentragmodule eingerichtet sind.

Vorteilhaft sind die ersten Montagemittel des Grundtragmoduls so angeordnet, dass ein Austausch der Seitentragmodule untereinander weiterhin eine lösbare Verbindung ermöglicht. Somit kann, beispielsweise beim Zusammenbau, ein beliebiges Seitentragmodule verwendet werden und es muss kein gesondertes für eine Seite ausgewählt werden.

Zudem können Materialbelastungen sinnvoll reduziert werden, wie hierin beschrieben. Zudem ermöglichen die ersten Montagemittel des Grundtragmoduls, dass auch bei Aneinanderreihung von weiteren Paaren von Seitentragmodulen, die weiteren Paare Seitentragmodule mit dem Grundtragmodul lösbar verbunden werden können.

Die Stabilität der Tragstruktur wird somit sichergestellt, wobei gleichzeitig eine Einteilung der Tragstruktur in mehrere Bauteile ermöglicht wird. Es ist nicht erforderlich die aneinandergereihten Paare von Seitentragmodulen untereinander lösbar zu verbinden, da das Grundtragmodul eine (indirekte) Verbindung bereitstellt. Diese Verbindung erfolgt, in einem Beispiel, über die gesamte Länge der aneinandergereihten Paare von Seitentragmodulen.

Die ersten Montagemittel können beispielsweise Befestigungslöcher umfassen. Es können beispielsweise Schrauben durch die ersten Montagemittel der Seitentragmodule geführt werden, die in die ersten Montagemittel des Grundtragmoduls eingreifen. Kraftschlüssig

**Eine 12. Ausführungsform** betrifft eine der vorhergehenden Ausführungsformen, wobei die Seitentragmodule länglich sind und im Wesentlichen ein U-förmiges Profil mit unterschiedlich langen Schenkeln definieren, wobei der kleinere Schenkel jedes Seitentragmoduls im Wesentlichen bündig mit dem Grundtragmodul abschließt.

Dies bietet den Vorteil, dass im Bereich des Stegs des U-förmigen Profils Kabel, Schläuche oder ähnliches gesammelt werden kann und vor Beeinträchtigungen geschützt ist. Gleichwohl kann mit dem kleineren Schenkel eine lösbare Verbindung mit dem Grundtragmodul ermöglicht werden. Der bündige Abschluss bietet den Vorteil, dass bspw. ein in der Tragstruktur angeordnetes Bauteil flächig über das Grundtragmodul und den bündigen Abschluss hinausragen kann. Somit kann ein breiteres Bauteil (Breite hierbei als quer zur Längsrichtung zu verstehen) in der Tragstruktur angeordnet werden, ohne, dass Kabel, Schläuche oder ähnliches beschädigt werden.

Das U-förmige Profil kann so verstanden werden, dass ein Profil im Querschnitt des Seitentragmoduls rechtwinklig zur Förderrichtung (Längsrichtung des Seitentragmoduls) im Wesentlichen ein U nachbildet. Dabei kann das "U" eckig gestaltet sein und es können kleinere Abweichungen von einem gewöhnlichen "U" umfasst sein.

**Eine 13. Ausführungsform** betrifft eine der vorhergehenden Ausführungsformen, wobei der Vorschub eine Führungsschiene umfasst, die auf der Tragstruktur angeordnet ist, und wobei die Seitentragmodule dritte Montagemittel aufweisen, um die Führungsschiene lösbar mit einem Seitentragmodul zu verbinden, wobei, optional, die Führungsschiene und die dritten Montagemittel der Seitentragmodule so eingerichtet sind, dass die Führungsschiene gleichzeitig mit mehreren in Förderrichtung angeordneten Seitentragmodulen verbunden werden kann.

Die Führungsschiene kann so eingerichtet sein, dass sie bewegliche Bauteile des Vorschubs, beispielsweise das Fördermodul, aufnimmt. Ferner kann die Führungsschiene das Fördermodul beispielsweise entlang der Förderrichtung in beiden Richtungen führen (z.B. kann das Fördermodul in beide Richtungen bewegt werden, wobei eine der Richtungen der Förderrichtung entspricht). Mithin kann das Fördermodul eine translatorische Bewegung ausführen. Es können auch zwei Führungsschienen vom Vorschub umfasst sein, die sodann auf jeweils beiden Seitentragmodulen des ersten Paars von Seitentragmodulen angeordnet sind.

Die Ausführungsform bietet zudem den Vorteil, dass mehrere Seitentragmodule in Längsrichtung mit einer Führungsschiene verbunden werden können. Folglich können die Führungsschienen zwei Funktionen erfüllen, nämlich die Führung des Fördermoduls und eine Erhöhung der Stabilität des Vorschubs.

**Eine 14. Ausführungsform** betrifft eine der vorhergehenden Ausführungsformen, wobei das Grundtragmodul zweite Montagemittel aufweist, die, optional, paarweise entlang der Förderrichtung angeordnet sind, wobei der Vorschub zumindest eine Antriebseinheit umfasst, vorzugsweise eine elektrische Antriebseinheit, am meisten bevorzugt einen Linearmotor; wobei die Antriebseinheit in der Tragstruktur aufgenommen ist und dazu eingerichtet ist, das Fördermodul zu bewegen, wobei die zweiten Montagemittel des Grundtragmoduls so angeordnet sind, dass die Antriebseinheit entlang der Förderrichtung an variablen Positionen mit dem Grundtragmodul vorzugsweise lösbar verbunden werden kann.

Dies bietet den Vorteil, dass die Antriebseinheit beliebig und flexibel in Längsrichtung (parallel/entlang zur Förderrichtung) positioniert werden kann. Folglich kann eine gewünschte Überdeckung zwischen Antriebseinheit und Magnetplatte des Fördermoduls erzielt werden. Die Position der Antriebseinheit kann insbesondere bei einem bereits bestehenden Vorschub nachträglich auf einen anderen gewünschten Vorschubanwendungsfall geändert werden. Die Antriebseinheit kann beispielsweise an einem ersten Ende der Tragstruktur positioniert werden, sofern gewünscht ist, dass zu Beginn eines Fahrweges des Fördermoduls eine große Beschleunigung vorliegt.

Das Grundtragmodul kann folglich eine Vielzahl beanstandeter Befestigungslöcher aufweist, um eine Verstellung der Antriebseinheit in einer Längsrichtung zu ermöglichen. Die zweiten Montagemittel können beispielsweise in äquidistanten Abständen, oder abschnittsweise äquidistanten Abständen in Längsrichtung des Grundtragmoduls (Förderrichtung) angeordnet sein. Die zweiten Montagemittel des Grundtragmoduls sind beispielsweise rechtwinklig zu den ersten Montagemitteln des Grundtragmoduls orientiert.

Die Antriebseinheit kann von der Tragstruktur quer zur Förderrichtung begrenzt sein. Beispielsweise können die Schenkel der U-förmigen Tragstruktur die Antriebseinheit quer zur Förderrichtung begrenzen.

**Eine 15. Ausführungsform** betrifft eine der vorhergehenden Ausführungsformen, ferner umfassend zwei Endplatten, die an gegenüberliegenden Seiten der Tragstruktur lösbar mit der Tragstruktur, vorzugsweise nicht mit dem Grundtragmodul, verbunden sind.

Die gegenüberliegenden Seiten der Tragstruktur können als entlang der Förderrichtung gegenüberliegend erachtet werden. Sodann definieren die Endplatten im Wesentlichen die Enden der Tragstruktur in Längsrichtung (Förderrichtung).

Vorzugsweise sind die Endplatten mit den Stirnflächen der Seitentragmodule (über die zweiten Montagemittel der Seitentragmodule) lösbar verbunden. Eine Befestigung mit dem Grundtragmodul ist somit vorteilhaft nicht erforderlich.

Es ist möglich, dass die Endplatten im Verbund mit der Tragstruktur über die Stirnflächen eines Paars an Seitentragmodulen hinausragen. Dies bietet mehr Platz für die Montage und kann zur Stabilität beitragen.

**Eine 16. Ausführungsform** betrifft eine der vorhergehenden Ausführungsformen, wobei die Endplatten so eingerichtet sind, dass die Endplatten untereinander austauschbar mit der Tragstruktur lösbar verbunden werden können, wobei, optional, der Vorschub so eingerichtet ist, dass das Fördermodul bei einem gegenseitigen Austausch der Endplatten weiterhin in Förderrichtung bewegbar auf der Tragstruktur angeordnet werden kann.

Die Endplatten können Befestigungslöcher aufweisen, die vorzugsweise symmetrisch an den Endplatten angeordnet sind. Folglich wird ein Austausch der Endplatten untereinander ermöglicht. Dies erhöht die Flexibilität und trägt zur Modularität bei.

Es gelten ferner zumindest die Ausführungen und Vorteile zur 3. und 6. Ausführungsform.

**Eine 17**. **Ausführungsform** betrifft eine der vorhergehenden Ausführungsformen, wobei die Endplatten eine Aussparung in Förderrichtung aufweisen, die dazu eingerichtet ist, das Fördermodul im Betrieb des Vorschubs zumindest zum Teil zu empfangen.

Die Aussparung bietet den Vorteil, dass das Fördermodul einen längeren Fahrweg bei gleichbleibender Gesamtlänge des Vorschubs (gemessen anhand des Abstands der Außenseiten der Endplatten in Längsrichtung) zurücklegen kann. Es kann folglich ein relativ betrachtet vergrößerter Fahrweg der auf dem Fördermodul angeordneten Wagenplatte/Haltevorrichtung(en) ermöglicht werden und somit das Bandmaterial über einen relativ betrachtet vergrößerten Weg sicher geführt werden.

**Eine 18. Ausführungsform** betrifft eine der vorhergehenden Ausführungsformen, wobei die Länge des Grundtragmoduls in Förderrichtung der Länge des ersten Paars oder der Paare an Seitentragmodulen entspricht.

Die hierin beschriebenen Grundtragmodule sind üblicherweise länglich, wobei die Längsrichtung entlang der Förderrichtung, insbesondere parallel zur Förderrichtung verlaufen kann. Das Grundtragmodul kann integral und als ein Stück ausgeführt sein.

Ein Paar Seitentragmodule ist üblicherweise so angeordnet, dass die Seitentragmodule gegenüberliegend mithin quer zur Förderrichtung angeordnet sind. Somit entspricht die Länge eines Paars von Seitentragmodulen der Länge eines Seitentragmoduls. Sofern mehrere Paare von Seitentragmodulen aneinandergereiht sind, weist das Grundtragmodul die Länge von der Summe der Länge aller Paare von Seitentragmodulen auf. Dies erhöht die Stabilität und Robustheit der ausgebildeten U-förmigen Tragstruktur.

Die Tragstruktur kann demgemäß so verstanden werden, dass die Reihen an Seitentragmodulen beidseitig mit dem einzelnen dazwischenliegenden Grundtragmodul lösbar verbunden sind.

**Eine 19. Ausführungsform** betrifft eine der vorhergehenden Ausführungsformen, wobei der Vorschub zumindest eine Führungsschiene umfasst, wobei die Länge der Führungsschiene in Förderrichtung der Länge des ersten Paars oder der Paare an Seitentragmodulen entspricht.

Dies bietet den Vorteil, dass die Stabilität des Vorschubs weiter erhöht werden kann. Insbesondere kann sich die Führungsschiene über die gesamte Länge der aneinandergereihten Seitentragmodule erstrecken und somit eine lösbare Verbindung mit diesen ausbilden. Diese Ausführungsform kombiniert die vorstehend bereits beschriebenen Vorteile der Führungsschiene.

**Eine 20. Ausführungsform** betrifft eine der vorhergehenden Ausführungsformen, wobei die Seitentragmodule jeweils eine Länge von maximal 250 mm, bevorzugt maximal 210 mm, weiter bevorzugt maximal 180 mm, ferner bevorzugt maximal 150 mm, ferner bevorzugt maximal 140 mm, ferner bevorzugt maximal 135 mm, am meisten bevorzugt maximal 131 mm oder 130 mm aufweisen; und/oder eine Länge von mindestens 50 mm, bevorzugt mindestens 70 mm, weiter bevorzugt mindestens 90 mm, ferner bevorzugt mindestens 110 mm, ferner bevorzugt mindestens 120 mm, ferner bevorzugt mindestens 125 mm, am meisten bevorzugt mindestens 129 mm aufweisen.

Erfindungsgemäß wird mit dieser Länge des Seitentragmoduls ein guter Kompromiss geschaffen aus zum einen ausreichender Stabilität (größere Länge wünschenswert) und zum anderen erhöhte Modularität des Vorschub (geringere Länge wünschenswert). Die Seitentragmodule können somit in höherer Stückzahl gefertigt werden und in einer Vielzahl in einem Vorschub eingesetzt werden. Somit können auch Vorschübe unterschiedlicher Vorschubanwendungen aus den gleichen Bauteilen gebildet werden.

In einem Beispiel kann der Vorschub genau ein Paar Seitentragmodule umfassen, sodass der Vorschub eine Vorschublänge im Bereich von 120-140 mm, vorzugsweise 125-135 mm aufweist.

In einem weiteren Beispiel kann der Vorschub genau zwei Paare Seitentragmodule umfassen, sodass der Vorschub eine Vorschublänge im Bereich von 250-270 mm, vorzugsweise 255-265 mm aufweist.

In einem weiteren Beispiel kann der Vorschub genau drei Paare Seitentragmodule umfassen, sodass der Vorschub eine Vorschublänge im Bereich von 380-400 mm, vorzugsweise 385-395 mm aufweist.

In einem weiteren Beispiel kann der Abstand zweier Endplatten, maximal 500 mm, bevorzugt maximal 450 mm, weiter bevorzugt maximal 420 mm, ferner bevorzugt maximal 400 mm, am meisten bevorzugt maximal 391 mm betragen; und/oder mindestens 70 mm, bevorzugt mindestens 90 mm, weiter bevorzugt mindestens 110 mm, am meisten bevorzugt mindestens 129 mm betragen.

**Eine 21. Ausführungsform** betrifft eine der vorhergehenden Ausführungsformen, wobei die ersten und optional zweiten und optional dritten Montagemittel der Seitentragmodule und optional die ersten und optional die zweiten Montagemittel des Grundtragmoduls jeweils symmetrisch an den jeweiligen Modulen angeordnet sind.

Dies bietet den Vorteil das ein einfacher Austausch und/oder Umbau der Bauteile eines Vorschubs ermöglicht wird. Dies erhöht die Flexibilität und reduziert die Kosten.

Die symmetrische Anordnung könnte so verstanden werden, dass, beispielsweise, die Montagemittel einen gleichen Abstand zu einer Hauptachse des jeweiligen Moduls aufweisen. Ferner können die Montagemittel im Wesentlichen gleichartig geformt sein.

**Eine 22. Ausführungsform** betrifft eine der vorhergehenden Ausführungsformen, ferner umfassend ein oder mehrere weitere Paare gleichartiger Seitentragmodule, wobei die Paare Seitentragmodule in Förderrichtung aneinander angeordnet sind, wobei die Seitentragmodule mit dem Grundtragmodul quer zur Förderrichtung lösbar verbunden sind, um die Tragstruktur des Vorschubs entlang der Förderrichtung auszubilden.

Somit wird vorteilhaft ein Vorschub aus modularen Bauteilen bereitgestellt. Dieser kann kostengünstig hergestellt werden.

**Eine 23. Ausführungsform** der Erfindung betrifft einen Vorschub zur Förderung von einem Werkstück, insbesondere Bandmaterial, in einer Förderrichtung, umfassend: eine Tragstruktur, die entlang der Förderrichtung ausgebildet ist; und mindestens ein Fördermodul, das in Förderrichtung bewegbar auf der Tragstruktur angeordnet ist und eine Wagenplatte und zumindest eine längliche Haltevorrichtung umfasst, die vorzugsweise lösbar miteinander verbunden sind; wobei die Längsachse der Haltevorrichtung im Wesentlichen parallel zur Normalen der Wagenplatte verläuft.

Die "längliche" Haltevorrichtung ist so zu verstehen, dass es zumindest eine Abmessung der Haltevorrichtung gibt, die länger ist als zwei im Wesentlichen rechtwinklig dazu orientierten Abmessungen (die Abmessungen können als den drei Raumrichtungen eines dreidimensionalen Koordinatensystem entsprechend verstanden werden). Beispielsweise kann eine schmale Platte auch als länglich verstanden werden, sofern eine Seite länger ist als die zwei verbleibenden Seiten (jeweils rechtwinklig zur langen Seite).

Die Wagenplatte kann eine plattenähnliche Form aufweisen, die auch flächig sein kann. Mithin kann eine Normale auf dieser Platte/Fläche identifiziert werden. Es kann beispielsweise sein, dass die Wagenplatte eine Fläche aufweist, die größer ist als die anderen Flächen. Die Normale der Wagenplatte wird sodann üblicherweise als die Normale von dieser größeren Fläche verstanden.

Diese Ausführungsform der Erfindung bietet den Vorteil, dass beispielsweise ein bestehender Vorschub rotiert werden kann und weiterhin als Vorschub verwendet werden kann. Beispielsweise kann der Vorschub um die Förderrichtung rotiert werden, vorzugsweise um 85° bis 95°, am meisten bevorzugt um 89° bis 91°. Die hierin beschriebene Rotation kann auch in die entgegengesetzt Richtung erfolgen. Auch kann die Rotation auch eine Rotation um die hierin beschriebenen Winkel plus einem ein oder mehrfachen von 360° umfassen.

Diese Ausführungsform ist vorteilhaft für Anforderungen, wie sie von schmalen Bandmaterialien und/oder Drähten oder ähnliches gestellt werden. Breite Haltevorrichtungen sind für diese Anforderungen nicht notwendig. Folglich kann der benötigte Platz für den Vorschub eingespart werden. Zudem kann, sofern die gegebenen Platzverhältnis (beispielsweise in einer Werkshalle) einen horizontalen/liegenden (nicht rotierten) Vorschub nicht unterstützen, ein Vorschub rotiert werden und unter Zusammenbau der gleichen Bauteile der rotierte Vorschub gebildet werden, der eine geringere Breite aufweist.

Die konstruktive Gestaltung der Bauteile kann eine Rotation des Vorschub um die Längsachse des Vorschubs unterstützen. In manchen Fällen können bauliche Anpassungen am rotierten Vorschub vorgenommen werden, um diesen für eine neue (im Gegensatz zum nicht rotierten Zustand) Anforderung betreiben zu können.

Es ist von Vorteil, dass die Bauteile des Vorschubs aufgrund ihrer modularen/ähnlichen/universellen Beschaffenheit, die gleichen Bauteile der hierin beschriebenen Ausführungsformen sein können.

**Eine 24. Ausführungsform** betrifft die vorhergehende Ausführungsform, ferner umfassend mindestens eine Endplatte, die an einer entlang der Förderrichtung liegenden Seite der Tragstruktur vorzugsweise lösbar mit der Tragstruktur verbunden ist, wobei die Endplatte eine erste Abmessung entlang der Normalen der Wagenplatte aufweist, die geringer ist als eine zweite Abmessung, die im Wesentlichen rechtwinklig zur Normalen der Wagenplatte und zur Förderrichtung verläuft.

Die hierin beschriebene erste Abmessung kann auch als eine Breite der Endplatte für diese Ausführungsform verstanden werden. Somit ist der Vorschub vorteilhaft schmal ausgeführt und dennoch betreibbar.

Die zweite Abmessung ist somit im Wesentlichen rechtwinklig zur Normalen der Wagenplatte und rechtwinklig zur Förderrichtung. In einem Beispiel kann diese Abmessung auch als Höhe für diese Ausführungsform verstanden werden.

**Eine 25. Ausführungsform** betrifft die vorhergehende Ausführungsform, wobei das Verhältnis aus zweiter und erster Abmessung mindestens 1,2, bevorzugt mindestens 1,4, weiter bevorzugt mindestens 1,6, weiter bevorzugt mindestens 1,8, weiter bevorzugt mindestens 2,0, weiter bevorzugt mindestens 2,2, weiter bevorzugt mindestens 2,4, weiter bevorzugt mindestens 2,6, weiter bevorzugt mindestens 2,8, weiter bevorzugt mindestens 3,0, am meisten bevorzugt mindestens 3,2 beträgt.

Dies trägt weiter zu einer optimierten Raumausnutzung bei und erhöht die Flexibilität und Anwendbarkeit des Vorschubs.

**Eine 26. Ausführungsform** betrifft eine der Ausführungsformen 24 oder 25, umfassend eine weitere gleichartige Endplatten, wobei die Endplatten an in Förderrichtung gegenüberliegenden Seiten der Tragstruktur vorzugsweise lösbar mit der Tragstruktur verbunden sind.

Ein Vorteil dieser Ausführungsform besteht darin, dass der Vorschub mit einer Fläche der Tragstruktur und/oder der Endplatten an einer Wand befestigt werden kann und weiterhin betreibbar ist. Dabei ist die Fläche der Tragstruktur und/oder der Endplatten als eine solche zu verstehen, die üblicherweise im Wesentlichen parallel zu einem Boden verlaufen würden, sofern der Vorschub liegend betrieben werden würde.

**Eine 27. Ausführungsform** betrifft eine der Ausführungsformen 23 bis 26, wobei das Fördermodul eine flächige Magnetschiene umfasst, die mit der Wagenplatte so verbunden ist, dass ihre Normalen im Wesentlichen parallel verlaufen.

Die Magnetschiene umfasst üblicherweise einen Magneten. Die Magnetschiene weist zumeist eine Fläche auf, die größer ist als die anderen Flächen. Die Normale der Magnetschiene wird sodann üblicherweise als die Normale von dieser größeren Fläche verstanden.

Diese Ausführungsform hat den Vorteil, dass der Antrieb (über die Magnetschiene, die von der Antriebseinheit angetrieben wird) im Wesentlichen quer zu den Haltevorrichtungen verläuft. Somit kann insgesamt eine große Überdeckung von einer Antriebseinheit und der Magnetschiene erzielt werden (somit eine vorteilhafte Beschleunigung und Taktraten des Vorschubs), wobei gleichzeitig der Platzbedarf auf die Bedarfe angepasst und optimiert ist.

**Eine 28. Ausführungsform** betrifft eine der Ausführungsformen 23 bis 27, wobei die Tragstruktur ein U-förmiges Profil entlang der Förderrichtung aufweist, wobei die Wagenplatte des Fördermoduls im Wesentlichen auf den Schenkeln des U-förmigen Profils angeordnet ist, und wobei die Normale der Wagenplatte im Wesentlichen vom Steg des U-förmigen Profils zur Öffnung des U-förmigen Profils gerichtet ist.

Auch für diese Ausführungsform gelten die vorstehend genannten Vorteile. Das U-förmige Profil kann dazu dienen die Antriebseinheit aufzunehmen. Folglich ermöglicht die Orientierung des U-förmigen Profils einen optimierten Antrieb und Platzbedarf.

**Eine 29. Ausführungsform** betrifft eine der Ausführungsformen 24 bis 28, wobei die Endplatten zumindest zwei im Wesentlichen rechtwinklig zueinander orientierte Außenflächen aufweisen.

Dies bietet den Vorteil, dass der Vorschub vor und nach einer Rotation im Wesentlichen auf den Außenflächen aufgenommen werden kann, bzw. ein fester Stand gewährleistet werden kann.

**Eine 30. Ausführungsform** betrifft eine der Ausführungsformen 23 bis 29, wobei die Wagenplatte so eingerichtet ist, dass die Haltevorrichtung auch mit Ihrer Längsachse rechtwinklig zur Normalen der Wagenplatte, und vorzugsweise auch rechtwinklig zur Förderrichtung, mit der Wagenplatte lösbar verbunden werden kann.

Die Haltevorrichtungen können folglich umorientiert werden (bspw. um 90° rotiert) und in der rotierten Ausrichtung weiterhin an der Wagenplatte lösbar verbunden werden. So können beispielsweise Haltevorrichtungen an einer schmalen Seite des Vorschubs angeordnet werden. Vorteilhaft kann die gleiche Wagenplatte und die gleiche Haltevorrichtung hierfür verwendet werden. Somit können die Bauteile kosteneffektiver hergestellt werden.

In einem Beispiel kann die Haltevorrichtung in einer ersten Ausrichtung mit einer Oberseite der Wagenplatte und in einer zweiten Ausrichtung mit einer Außenseite der Wagenplatte lösbar verbunden werden kann. Die Oberseite der Wagenplatte kann beispielsweise die Gegenseite von der Seite sein, die zum Steg des U-förmigen Profils der Tragstruktur gerichtet ist. Mithin die Gegenseite von der Seite, die zu einem Antriebsmotor (der innerhalb des U-förmigen Profils aufgenommen ist) gerichtet ist. Die Außenseite der Wagenplatte kann die Oberseite der Wagenplatte seitlich begrenzen. Die Außenseite kann zu einem Schenkel des U-förmigen Profils der Tragstruktur gerichtet sein.

**Eine 31. Ausführungsform** betrifft eine der Ausführungsformen 23 bis 30, sofern abhängig von der Ausführung 24, wobei die Abmessung der Haltevorrichtung in Längsrichtung maximal 150%, bevorzugt maximal 140%, weiter bevorzugt maximal 130%, weiter bevorzugt maximal 120%, weiter bevorzugt maximal 120%, weiter bevorzugt maximal 110%, weiter bevorzugt maximal 100% der ersten Abmessung der Endplatte ist.

**Eine 32. Ausführungsform** betrifft eine der Ausführungsformen 23 bis 31, wobei der Vorschub einer der Vorschübe nach einem der Ausführungsformen 1 bis 22 ist.

Für diese und folgende Ausführungsformen gelten ebenso die in der vorliegenden Erfindung genannten Merkmale, Eigenschaften und Vorteile, sofern dies technisch sinnvoll ist. Auch können diese und folgende Ausführungsformen mit sämtlichen Merkmalen der vorherigen Ausführungsform kombiniert werden, sofern dies technisch sinnvoll ist.

**Eine 33. Ausführungsform** der Erfindung betrifft einen Vorschub zur Förderung von einem Werkstück, insbesondere Bandmaterial, in einer Förderrichtung, umfassend: eine Tragstruktur, die entlang der Förderrichtung ausgebildet ist; und ein erstes und ein zweites Fördermodul, die in Förderrichtung bewegbar auf der Tragstruktur angeordnet sind; wobei die Fördermodule in Förderrichtung unabhängig voneinander bewegbar auf der Tragstruktur angeordnet sind.

Diese Ausführungsform bietet den Vorteil, dass die Fördermodule (und die von ihr umfassten Wagenplatten) individuell angesteuert werden können. Auch können sie über einen individuellen Weg entlang der Förderrichtung des Bandmaterials bewegt werden.

Es ist von Vorteil, dass die Bauteile des Vorschubs aufgrund ihrer modularen/ähnlichen/universellen Beschaffenheit, die gleichen Bauteile der anderen hierin beschriebenen Ausführungsform sein können.

Das Bandmaterial kann vorteilhaft während des Betriebs des Vorschubs zu beispielsweise jedem Zeitpunkt von einer beweglichen Haltevorrichtung kontrolliert werden. Somit bedarf es keiner räumlich fixierten Haltevorrichtung(en).

**Eine 34. Ausführungsform** betrifft die vorhergehende Ausführungsform, wobei der Vorschub eine erste und eine zweite Antriebseinheit umfasst, die in der Tragstruktur aufgenommen und mit der Tragstruktur vorzugsweise lösbar verbunden sind, wobei die Antriebseinheiten dazu eingerichtet sind, das erste und das zweite Fördermodul zu bewegen.

Beispielsweise kann die erste Antriebseinheit dafür sorgen, dass sich eine Wagenplatte in eine Richtung bewegt und somit das Bandmaterial in diese Richtung führt. Zudem könnte im Wesentlichen zeitgleich die zweite Antriebseinheit die andere Wagenplatte antreiben, welche sich in die entgegengesetzte Richtung bewegt.

Der Vorschub kann folglich mit einer erhöhten Taktrate betrieben werden. Dies trägt zu einem effizienten und kostengünstigen Vorschub bei.

**Eine 35. Ausführungsform** betrifft eine der Ausführungsformen 33 oder 34, wobei die Tragstruktur Montagemittel aufweist, die so angeordnet sind, dass die Antriebseinheiten entlang der Förderrichtung an variablen Positionen mit der Tragstruktur lösbar verbunden werden können.

Die Antriebseinheit kann somit beliebig und flexibel in Längsrichtung (parallel/entlang zur Förderrichtung) positioniert werden kann. Folglich kann eine gewünschte Überdeckung zwischen Antriebseinheit und Fördermodul (insbesondere einer Magnetplatte, die vom Fördermodul umfasst sein kann) erzielt werden.

Die Position der Antriebseinheit kann insbesondere bei einem bereits bestehenden Vorschub nachträglich auf einen anderen gewünschten Vorschubanwendungsfall geändert werden.

Die Tragstruktur kann, in einem Beispiel, eine Vielzahl beanstandeter Befestigungslöcher aufweist, um eine Verstellung der Antriebseinheit in einer Längsrichtung zu ermöglichen. Die Montagemittel können beispielsweise in äquidistanten Abständen, oder abschnittsweise äquidistanten Abständen in Längsrichtung der Tragstruktur (Förderrichtung) angeordnet sein.

Die Antriebseinheit kann von der Tragstruktur quer zur Förderrichtung begrenzt sein. Beispielsweise können die Schenkel der U-förmigen Tragstruktur die Antriebseinheit quer zur Förderrichtung begrenzen.

**Eine 36. Ausführungsform** betrifft eine der Ausführungsformen 33 bis 35, wobei der Vorschub einer der Vorschübe nach einem der Ausführungsformen 1 bis 32 ist.

Für diese und folgende Ausführungsformen gelten ebenso die in der vorliegenden Erfindung genannten Merkmale, Eigenschaften und Vorteile, sofern dies technisch sinnvoll ist. Auch können diese und folgende Ausführungsformen mit sämtlichen Merkmalen der vorherigen Ausführungsform kombiniert werden, sofern dies technisch sinnvoll ist.

**Eine 37. Ausführungsform** der Erfindung betrifft einen Vorschub zur Förderung von einem Werkstück, insbesondere Bandmaterial, in einer Förderrichtung, umfassend: eine Tragstruktur, die entlang der Förderrichtung ausgebildet ist; und ein erstes und ein zweites Fördermodul, die in Förderrichtung bewegbar auf der Tragstruktur angeordnet sind; wobei die Fördermodule so eingerichtet sind, dass sie sich in Förderrichtung zumindest zum Teil überlappen können.

Diese Ausführungsform bietet den Vorteil, dass der Vorschub in der Länge (entlang der Förderrichtung) kompakt ausgeführt sein und dennoch eine große Weglänge (Hub) ausführen kann. Die Überlappung stört den normalen Betrieb und Fahrweg der beiden Fördermodule nicht. Der benötigte Installationsraum kann somit reduziert werden. Dies kann beispielsweise Platz in Werkshallen einsparen und trägt zur Kostenreduktion bei. Die Fördermodule können, in einem Beispiel, auch unabhängig voneinander betrieben werden.

In einem Beispiel kann der Teil des Fördermoduls, der sich überlappt auch nur ein Teil von Magnetschienen sein. In einem weiteren Beispiel kann der Teil auch eine Wagenplatte und/oder eine Greiferplatte umfassen.

Die Überlappung kann so verstanden werden, dass zum Beispiel in einem Querschnitt durch den Vorschub senkrecht zur Förderrichtung (beispielsweise ein Querschnitt in der Mitte der Tragstruktur), jeweils ein Teil des ersten und ein Teil des zweiten Fördermoduls ersichtlich wäre.

Der Vorschub ermöglicht auf diese Weise einen Fahrweg einer Wagenplatte (vom Fördermodul umfasst) über eine Länge von mindestens 30%, bevorzugt mindestens 40%, weiter bevorzugt mindestens 45%, am meisten bevorzugt mindestens 50% der gesamten Länge der Tragstruktur.

Der Vorschub kann, in einem Beispiel, auch durch den Zusammenbau von zwei Vorschüben gebildet werden. Dies ist ein Vorteil hinsichtlich der Beschaffung der Bauteile (bspw. durch einen Serieneffekt).

Das Bandmaterial kann vorteilhaft während des Betriebs des Vorschubs zu jedem Zeitpunkt von einer beweglichen Haltevorrichtung kontrolliert werden. Somit bedarf es keiner räumlich fixierten Haltevorrichtung(en). Durch diese Kontrolle kann die Materialführung verbessert werden.

**Eine 38. Ausführungsform** betrifft die vorhergehende Ausführungsform, wobei die Fördermodule so eingerichtet sind, dass sie sich in Förderrichtung nicht überlappen können.

**Eine 39. Ausführungsform** betrifft eine der Ausführungsformen 37 oder 38, wobei die Fördermodule so eingerichtet sind, dass sie sich im Betrieb des Vorschubs zu jedem Zeitpunkt in Förderrichtung zumindest zum Teil überlappen.

**Eine 40. Ausführungsform** betrifft eine der Ausführungsformen 37 bis 39, wobei die Tragstruktur aus einem ersten und einem zweiten gleichartigen Tragstrukturelement gebildet ist, die rückseitig miteinander vorzugsweise lösbar verbunden sind.

Die gleichartigen Tragstrukturelemente ermöglichen somit eine vereinfachte vorzugsweise lösbare Verbindung zu einer Tragstruktur. Folglich können die gleichen Bauteile verwendet werden. Die Rückseite kann hierin als die Seite eines Tragstrukturelements verstanden werden, die in liegenden Vorschüben üblicherweise zum Boden gerichtet ist.

**Eine 41. Ausführungsform** betrifft die vorhergehende Ausführungsform, wobei die Tragstrukturelemente eine im Wesentlichen ebene Rückseite, vorzugsweise ohne Vorsprünge, aufweisen, um im Wesentlichen bündig aneinander anzustoßen.

Dies bietet den Vorteil, dass die Tragstrukturelemente vereinfacht miteinander lösbar verbunden werden können. Beispielsweise gibt es im Wesentlichen lediglich geringe oder keine Unebenheiten, die die Verbindung nachteilig beeinflussen können.

**Eine 42. Ausführungsform** betrifft eine der Ausführungsformen 40 oder 41, wobei sich die Tragstrukturelemente über eine Fläche von zumindest 10%, bevorzugt mindestens 20%, weiter bevorzugt mindestens 30%, weiter bevorzugt mindestens 40%, weiter bevorzugt mindestens 50%, weiter bevorzugt mindestens 50%, weiter bevorzugt mindestens 60%, weiter bevorzugt mindestens 70%, am meisten bevorzugt mindestens 80% der Rückseite kontaktieren.

Dies bietet den Vorteil, dass eine erhöhte Kontaktfläche bereitgestellt werden kann. Es kann sich folglich weniger Schmutz oder sonstige Fremdstoffe zwischen den Tragstrukturelementen ansammeln.

Die Tragstrukturelemente können rückseitig, in einem Beispiel, eine Nut entlang der Förderrichtung aufweisen, diese kann der Befestigung des Vorschubs an Winkelkonsolen dienen, sodass, beispielsweise die Ausrichtung des Vorschubs optimiert werden kann. Sofern ein Grundtragmodul umfasst ist, kann die Nut auf der Rückseite des Grundtragmoduls vorgesehen sein.

**Eine 43. Ausführungsform** betrifft eine der Ausführungsformen 40 bis 42, ferner umfassend zwei erste Endplatten, die an gegenüberliegenden Seiten des ersten Tragstrukturelements vorzugsweise lösbar mit dem ersten Tragstrukturelement verbunden sind, wobei die Endplatten jeweils eine im Wesentlichen ebene Rückseite, vorzugsweise ohne Vorsprünge, aufweisen, um im Wesentlichen bündig mit dem ersten Tragstrukturelement abzuschließen.

Dies begünstigt die Bereitstellung einer vereinfachten und vorzugsweise lösbaren Verbindung. Die Fläche, der sich berührenden Bauteile kann somit bei der rückseitigen Verbindung erhöht werden. Dies begünstigt Montagemöglichkeiten.

**Eine 44. Ausführungsform** betrifft die vorhergehende Ausführungsform, ferner umfassend zwei zweite gleichartige Endplatten, die an gegenüberliegenden Seiten des zweiten Tragstrukturelements lösbar mit der zweiten Tragstrukturelement verbunden sind; wobei zumindest eine der zwei zweiten Endplatten rückseitig mit zumindest einer der zwei ersten Endplatten lösbar verbunden ist.

**Eine 45. Ausführungsform** betrifft eine der Ausführungsformen 37 bis 44, wobei der Vorschub einer der Vorschübe nach einem der Ausführungsformen 1 bis 36 ist.

Für diese und folgende Ausführungsformen gelten ebenso die in der vorliegenden Erfindung genannten Merkmale, Eigenschaften und Vorteile, sofern dies technisch sinnvoll ist. Auch können diese und folgende Ausführungsformen mit sämtlichen Merkmalen der vorherigen Ausführungsform kombiniert werden, sofern dies technisch sinnvoll ist.

**Eine 46. Ausführungsform** betrifft eine der vorhergehenden Ausführungsformen, wobei das Fördermodul eine Wagenplatte und eine Magnetschiene umfasst, die so eingerichtet sind, dass sie entlang der Förderrichtung in variablem Abstand, optional in variablem Abstand zueinander, lösbar verbunden werden können, wobei, optional, das Fördermodul mehrere vorzugsweise gleichartige Wagenplatten und/oder Magnetschienen umfasst, die so eingerichtet sind, dass sie vorzugsweise angrenzend aneinander entlang der Förderrichtung miteinander lösbar verbunden werden können.

Die Magnetschiene kann beispielsweise durch die Antriebseinheit angetrieben und sodann bewegt werden. Diese Bewegung wird auf die Wagenplatte übertragen. Der variable Abstand erhöht die Flexibilität der Montage und trägt zur Modularität des Vorschubs bei. Die Magnetschiene kann beispielsweise in einer Vielzahl verwendet werden, die aneinandergereiht in Förderrichtung mit der Wagenplatte lösbar verbunden werden.

Die Magnetschiene kann an einer Unterseite der Wagenplatte lösbar montiert werden, sodass die Magnetschiene nur einen geringen Abstand zu der darunter angeordneten Antriebseinheit aufweist. Dies trägt zur effizienten Bewegung des Fördermoduls bei.

Die Wagenplatte kann eine im Wesentlichen ebene/flächige Form aufweisen. Dies kann die Höhe des Vorschubs reduzieren und trägt zur kompakten Bauform des Vorschubs bei.

Diese Ausführungsform hat den Vorteil, dass die Magnetschienen gleichartig sind und modular in einem Vorschub verwendet werden können. Somit kann eine Aneinanderreihung von Magnetschienen durchgeführt werden zur Nachbildung einer beliebigen Länge von Magnetschienen.

**Eine 47. Ausführungsform** betrifft eine der vorhergehenden Ausführungsformen, wobei das Fördermodul ferner zumindest eine Haltevorrichtung umfasst, die so eingerichtet ist, dass sie entlang der Förderrichtung in variablem Abstand zur Wagenplatte mit der Wagenplatte lösbar verbunden werden kann.

Die Wagenplatte kann beispielsweise eine Vielzahl von Befestigungslöchern aufweisen. Folglich kann die gleiche (hierin auch als gleichartig bezeichnet) Wagenplatte für unterschiedliche Vorschubanwendungen verwendet werden. Dies erhöht die Flexibilität.

Die Haltevorrichtung kann beispielsweise nah an einem ersten Ende der Wagenplatte (parallel zur Förderrichtung gesehen) mit der Wagenplatte lösbar verbunden werden. Dies kann sinnvoll sein, sofern ein größerer Durchhang von Bandmaterial für die Förderung nicht kritisch ist. Die Haltevorrichtung kann auch an dem gegenüberliegenden Ende der Wagenplatte mit der Wagenplatte lösbar verbunden werden. Somit könnte ein Durchhang von Bandmaterial reduziert werden.

**Eine 48. Ausführungsform** betrifft eine der vorhergehenden Ausführungsformen, wobei die Haltevorrichtungen dazu eingerichtet sind, in Eingriff mit dem Werkstück zu kommen, wobei, optional, die Haltevorrichtungen pneumatisch angetrieben werden, wobei, optional, die Haltevorrichtungen Zangen sind.

Eine Mehrzahl von Haltevorrichtungen bietet den Vorteil, dass eine erhöhte Klemmkraft erzeugt werden kann. Somit könnten auch höhere Taktraten erzielt werden. Der pneumatische Betrieb stellt eine sichere Technologie dar und begünstigt einen sicheren Betrieb des Vorschubs.

**Eine 49. Ausführungsform** betrifft eine der vorhergehenden Ausführungsformen, ferner umfassend eine Auflageplatte, die so eingerichtet ist, dass sie an gegenüberliegenden Seiten der Tragstruktur lösbar verbunden werden kann.

Die gegenüberliegenden Seiten der Tragstruktur können als entlang der Förderrichtung betrachtet verstanden werden. Dies erhöht die Modularität, da die gleiche Auflageplatte an beiden Seiten der Tragstruktur lösbar verbunden werden kann. Ein weiterer Vorteil ist das der gleiche Vorschub in unterschiedlichen Förderrichtungen betrieben werden kann, indem ein einfacher Wechsel eines Bauteils vorgenommen wird. Die Auflageplatte kann mit einer Endplatte des Vorschubs lösbar verbunden werden, wobei die Endplatte mit der Tragstruktur lösbar verbunden werden kann.

**Eine 50. Ausführungsform** betrifft eine der vorhergehenden Ausführungsformen, ferner umfassend zumindest ein oder mehrere der folgenden: eine Führungsrolle, einen Einlaufführungsaufsatz, eine Greiferplatte, eine seitliche Abdeckplatte, eine obere Abdeckplatte, einen Montagefuß.

Die in dieser Ausführungsform genannten Bauteile weisen ähnliche Vorteile auf wie vorstehend schon beschrieben. Insbesondere lassen Sie sich beliebig austauschen, beispielsweise wenn sie in einer Mehrzahl im Vorschub angeordnet sind.

Die Führungsrollen sind beispielsweise dazu eingerichtet, das Bandmaterial zu führen. In einem Beispiel kann die Auflageplatte zwei Führungsrollen umfassen, die als ein Paar angeordnet sind und in gleichem Abstand von der Längsachse des Vorschub entfernt angeordnet sind.

Die seitliche Abdeckplatte kann im Wesentlichen parallel zur Seite der Schenkel des U-förmigen Profils der Tragstruktur verlaufen.

**Eine 51. Ausführungsform** betrifft eine der vorhergehenden Ausführungsformen, wobei der Vorschub ferner zumindest eine Führungsschiene umfasst, wobei die Länge einer Führungsschiene in Förderrichtung der Länge der Tragstruktur entspricht.

Somit wird die Stabilität des Vorschubs weiter erhöht. Insbesondere kann sich die Führungsschiene über die gesamte Länge der aneinandergereihten Seitentragmodule erstrecken und somit eine Verbindung mit diesen ausbilden. Diese Ausführungsform kombiniert die vorstehend bereits beschriebenen Vorteile der Führungsschiene.

**Eine 52. Ausführungsform** betrifft eine der vorhergehenden Ausführungsformen, wobei der Vorschub eine Führungsschiene umfasst, mit einer Länge von maximal 250 mm, bevorzugt maximal 210 mm, weiter bevorzugt maximal 180 mm, ferner bevorzugt maximal 150 mm, ferner bevorzugt maximal 140 mm, ferner bevorzugt maximal 135 mm, am meisten bevorzugt maximal 131 mm oder 130 mm; und/oder mit eine Länge von mindestens 50 mm, bevorzugt mindestens 70 mm, weiter bevorzugt mindestens 90 mm, ferner bevorzugt mindestens 110 mm, ferner bevorzugt mindestens 120 mm, ferner bevorzugt mindestens 125 mm, am meisten bevorzugt mindestens 129 mm.

Für die Führungsschiene gelten ähnliche Vorteile wie vorstehend zu den Seitentragmodulen beschrieben.

**Eine 53. Ausführungsform** betrifft eine der vorhergehenden Ausführungsformen, wobei der Vorschub ein Zangenvorschub oder ein Walzenvorschub ist, vorzugsweise ein Zangenvorschub.

**Eine 54. Ausführungsform** betrifft eine der vorhergehenden Ausführungsformen, wobei der Vorschub eine Breite, vorzugsweise eine Breite einer Endplatte, von maximal 300 mm, bevorzugt maximal 250 mm, weiter bevorzugt maximal 220 mm, ferner bevorzugt maximal 200 mm, am meisten bevorzugt maximal 190 mm aufweist, und/oder eine Breite von mindestens 50 mm, bevorzugt mindestens 70 mm, weiter bevorzugt mindestens 90 mm, ferner bevorzugt mindestens 100 mm, am meisten bevorzugt mindestens 112 mm aufweist, wobei, optional, die Breite der Endplatte der größten Abmessung der Endplatte entspricht.

Mit dieser Breite wird ein guter Kompromiss geschaffen aus zum einen ausreichenden Montagemöglichkeiten an der Endplatte zur Erhöhung der Modularität (höhere Breite wünschenswert) und zum anderen einer kompakten Bauform des Vorschub (geringere Breite wünschenswert).

Die Breite der Endplatte entspricht üblicherweise der größten Dimension, die die Endplatte in drei rechtwinklig zueinander orientierten Dimensionen aufweist.

**Eine 55. Ausführungsform** betrifft eine der vorhergehenden Ausführungsformen, wobei der Vorschub eine Höhe, vorzugsweise eine Höhe einer Endplatte, von maximal 300 mm, bevorzugt maximal 250 mm, weiter bevorzugt maximal 220 mm, ferner bevorzugt maximal 200 mm, am meisten bevorzugt maximal 140 mm aufweist; und/oder eine Höhe von mindestens 30 mm, bevorzugt mindestens 40 mm, weiter bevorzugt mindestens 50 mm, ferner bevorzugt mindestens 60 mm, am meisten bevorzugt mindestens 70 mm aufweist, wobei, optional, die Höhe der Endplatte nicht der größten Abmessung der Endplatte entspricht, und, optional, die Höhe der Endplatte nicht der Abmessung der Endplatte in Förderrichtung entspricht.

Die Höhe der Endplatte kann beispielsweise als rechtwinklig zur Breite verstanden werden.

**Eine 56. Ausführungsform** betrifft eine der vorhergehenden Ausführungsformen, wobei der Vorschub Haltevorrichtungen umfasst mit einer Klemmkraft von mindestens 100 N, bevorzugt mindestens 135 N, weiter bevorzugt mindestens 150 N, weiter bevorzugt mindestens 200 N, weiter bevorzugt mindestens 250 N, am meisten bevorzugt mindestens 280 N, und/oder wobei der Vorschub Haltevorrichtungen umfasst mit einer Klemmkraft von maximal 14.000 N, bevorzugt maximal 5.000 N, weiter bevorzugt maximal 4.000 N, weiter bevorzugt maximal 3.000 N, am meisten bevorzugt maximal 2.000 N; optional bei einer Druckbeaufschlagung der pneumatischen Haltevorrichtungen von mindestens 2 bar, bevorzugt mindestens 2.5 bar, weiter bevorzugt mindestens 3 bar, weiter bevorzugt mindestens 3.5 bar, weiter bevorzugt mindestens 4 bar, weiter bevorzugt mindestens 4.5 bar, weiter bevorzugt mindestens 5 bar, weiter bevorzugt mindestens 5.5 bar, am meisten bevorzugt mindestens 6 bar, und/oder optional bei einer Druckbeaufschlagung der pneumatischen Haltevorrichtungen von maximal 10 bar, bevorzugt maximal 8 bar, weiter bevorzugt maximal 7 bar, am meisten bevorzugt maximal 6 bar.

Ein optimaler Anpressdruck (Druckbeaufschlagung) kann je nach Anwendungsfall bestimmt werden. Es kann von Vorteil sein, einen geringen Anpressdruck einzustellen. Ein geringer Anpressdruck kann sich positiv auf die möglichen Taktraten auswirken. Je weniger Druckluft in die Haltevorrichtungen gepumpt werden muss, desto kürzer ist die Zeit, die die Haltevorrichtungen zum Klemmen des Bandmaterials benötigen. Dies kann folglich eine größere Anzahl an Hüben pro Minute ergeben.

**Eine 57. Ausführungsform** betrifft eine der vorhergehenden Ausführungsformen, wobei der Vorschub dazu eingerichtet ist, Taktraten von mindestens 200, bevorzugt mindestens 250, weiter bevorzugt mindestens 300, weiter bevorzugt mindestens 350, am meisten bevorzugt mindestens 400 auszuführen, und/oder Taktraten von maximal 2.500, bevorzugt maximal 2.000, weiter bevorzugt maximal 1.500, weiter bevorzugt maximal 1.400, am meisten bevorzugt maximal 1.300 auszuführen.

Die Taktrate kann auch von anderen Parametern des Vorschubs abhängen und anwendungsspezifisch eingestellt/festgelegt werden. Beispielsweise kann die Taktrate vom Vorschubwinkel (zur Verfügung stehendes Zeitfenster pro Hub) und/oder Länge der Förderung des Bandmaterials pro Takt abhängen. Bei einer geringen Vorschublänge kann die Taktrate üblicherweise größer sein. Bei größeren Vorschublängen kann die Taktrate kleiner sein.

### 4. Kurze Beschreibung der Figuren

Im Folgenden werden bevorzugte Ausführungsformen nur beispielhaft beschrieben. Es wird auf die folgenden begleitenden Figuren verwiesen:
- Fig. 1: zeigt einen herkömmlichen Grundkörper eines herkömmlichen Vorschubs, wie aus dem Stand der Technik bekannt ist;
- Fig. 2: zeigt den herkömmlichen Grundkörper aus Fig. 1 mit weiteren Bauteilen eines herkömmlichen Vorschubs, wie aus dem Stand der Technik bekannt ist;
- Fig. 2a: zeigt den herkömmlichen Grundkörper aus Fig. 2 mit ferner weiteren Bauteilen eines herkömmlichen Vorschubs, wie aus dem Stand der Technik bekannt ist;
- Fig. 2b: zeigt einen herkömmlichen Vorschub mit den herkömmlichen Bauteilen aus Fig. 2a und mit ferner weiteren Bauteilen, wie aus dem Stand der Technik bekannt ist;
- Fig. 3: zeigt eine Tragstruktur gemäß einer Ausführungsform der vorliegenden Erfindung;
- Fig. 4: zeigt die Tragstruktur aus Fig. 3 mit weiteren Bauteilen eines Vorschubs gemäß einer Ausführungsform der vorliegenden Erfindung;
- Fig. 4a: zeigt Fig. 3 in einer Explosionsansicht;
- Fig. 4b: zeigt Fig. 4 in einer Explosionsansicht;
- Fig. 5: zeigt die Tragstruktur aus Fig. 4 mit weiteren Bauteilen eines Vorschubs gemäß einer Ausführungsform der vorliegenden Erfindung;
- Fig. 6: zeigt einen Vorschub mit den Bauteilen aus Fig. 5 und mit weiteren Bauteilen eines Vorschubs gemäß einer Ausführungsform der vorliegenden Erfindung;
- Fig. 7: zeigt die Tragstruktur aus Fig. 4 mit weiteren Bauteilen eines Vorschubs gemäß einer Ausführungsform der vorliegenden Erfindung;
- Fig. 7a: zeigt die Ausführungsformen von Fig. 7, wobei die Tragstruktur ein weiteres Paar Seitentragmodule gemäß einer Ausführungsform der vorliegenden Erfindung umfasst;
- Fig. 7b: zeigt die Ausführungsformen von Fig. 7a, wobei die Tragstruktur ein weiteres Paar Seitentragmodule gemäß einer Ausführungsform der vorliegenden Erfindung umfasst;
- Fig. 8: zeigt die Ausführungsformen von Fig. 7b mit weiteren Bauteilen eines Vorschubs gemäß einer Ausführungsform der vorliegenden Erfindung;
- Fig. 9: zeigt einen rotierten Vorschub gemäß zwei Ausführungsformen der vorliegenden Erfindung;
- Fig. 10: zeigt einen Vorschub mit zwei Antriebseinheiten gemäß einer Ausführungsform der vorliegenden Erfindung in einer ersten Position der Wagenplatten (links) und einer zweiten Position der Wagenplatten (rechts);
- Fig. 11: zeigt einen Vorschub, der aus zwei rückseitig aneinander angeordneten Tragstrukturen gebildet ist gemäß einer Ausführungsform der vorliegenden Erfindung in einer ersten Position der Wagenplatten (links) und einer zweiten Position der Wagenplatten (rechts);
- Fig. 12: zeigt drei Vorschübe unterschiedlicher Länge gemäß drei Ausführungsformen der vorliegenden Erfindung, wobei die Ausführungsformen ähnlich zur Fig. 8 sind, jedoch eine andere Breite aufweisen;
- Fig. 13: zeigt drei Vorschübe unterschiedlicher Länge gemäß drei Ausführungsformen der vorliegenden Erfindung, wobei die Ausführungsformen ähnlich zur Fig. 9 sind, jedoch eine andere Höhe aufweisen;
- Fig. 14: zeigt zwei Vorschübe unterschiedlicher Länge gemäß zwei Ausführungsformen der vorliegenden Erfindung, wobei die Ausführungsformen ähnlich zur Fig. 10 sind, jedoch eine andere Breite aufweisen; und
- Fig. 15: zeigt zwei Vorschübe unterschiedlicher Länge gemäß zwei Ausführungsformen der vorliegenden Erfindung, wobei die Ausführungsformen ähnlich zur Fig. 11 sind, jedoch eine andere Breite aufweisen.

### 5 Detaillierte Beschreibung der Figuren

### Definitionen

Der Begriff "modular", "modularisiert" und/oder "Modularisierung" kann bedeuten, dass eine mit dem Begriff beschriebene Vorrichtung und/oder ein mit dem Begriff beschriebenes System und/oder Bauteil beliebig kombiniert werden (bspw. mit dem gleichen und/oder einer anderen modularen Vorrichtung/System/Bauteil), um dieselbe oder eine andere/eine beliebige Konfiguration (beispielsweise eine beliebige Konfiguration eines Vorschubs) bereitzustellen. Die "modularen" Bauteile können standardisierte/einheitliche/universelle Schnittstellen, beispielsweise Montagemittel/Montageflächen/Stirnflächen, umfassen, um miteinander und/oder mit anderen Bauteilen lösbar verbunden werden zu können. Mithin können die Bauteile, Komponenten oder Module flexibel miteinander interagieren.

Der Begriff "gleichartig", beispielsweise ein "gleichartiges" Seitentragmodul oder "gleichartige" Seitentragmodule, kann so verstanden werden, dass die Bauteile im Wesentlichen gleich, vorzugsweise identisch sind. Dabei sind Fertigungstoleranzen vom Begriff "gleichartig" umfasst. Folglich können zwei Bauteile, die Fertigungsungenauigkeiten aufweisen, dennoch als gleichartig bezeichnet werden. Im Wesentlichen sind die Fertigungsungenauigkeiten gering, sodass diese, in manchen Fällen, kaum erkennbar sind und zwei "gleichartige" Bauteile folglich von einer Durchschnittsperson als identisch erachtet werden können.

Der Begriff "montierbar", "montiert", "montieren", "Montage", "aneinander montiert", "daran montiert", "befestigen", "befestigt", "verbunden", "Verbund", kann so verstanden werden, dass bspw. zwei Bauteile im Wesentlichen fest miteinander verbunden sind. Mithin ist im Wesentlichen keine Bewegung der Bauteile relativ zueinander möglich. Beispielsweise sind zwei aneinander oder miteinander montierte Bauteile drehfest und/oder translationsfest.

Der Begriff "lösbar", beispielsweise "lösbar" montiert oder "lösbar" verbunden, kann so verstanden werden, dass eine Verbindung zwischen zwei Bauteilen im Wesentlichen zerstörungsfrei gelöst werden kann. Sofern nicht gesondert bezeichnet, ist "lösbar" als "mechanisch lösbar" zu verstehen. Die Begriffe sind so zu verstehen, dass eine physische Trennung der Bauteile ermöglicht ist. Dies kann z.B. durch Kraftschluss/Reibschluss (z.B. durch Schraubverbindungen) oder in manchen Fällen durch einen Formschluss erfolgen. Üblicherweise fällt eine stoffschlüssige Verbindung, bspw. Schweißen, nicht unter eine "lösbare" Montage, wie sie hierin verwendet wird.

Der Begriff "Zusammenbau", "zusammenbauen", "zusammengebaut" kann so verstanden werden, dass Bauteile vorzugsweise lösbar miteinander montiert werden, oder so angeordnet werden, dass sie eine bestimmte Bewegung einschränken.

Der Begriff "Vorschubzyklus" ist als ein Bewegungsablauf der Haltevorrichtung beweglich von einer Start- zu einer End- und wieder zu einer Startposition zu verstehen. Während eines Vorschubzyklus wird Bandmaterial um eine Vorschublänge gefördert. Die Anzahl der Vorschubzyklen pro Zeiteinheit ist auch als "Taktrate" zu verstehen und wird üblicherweise als Hub/min ausgedrückt.

Eine "Breite der Haltevorrichtung", z.B. einer Zange, kann so verstanden werden, dass die Breite in etwa der Breite des Vorschubs entspricht. Es ist jedoch auch möglich breitere Zangen als die Breite des Vorschubs bereitzustellen.

Eine "Durchlassbreite" der Haltevorrichtung, kann so verstanden werden, dass dies einer maximal möglichen Bandmaterialbreite entspricht, die gefördert werden kann. Es versteht sich, dass die Breite der Haltevorrichtung größer als die Durchlassbreite ist.

Als "Länge" des Vorschubs wird hierin der Abstand zwischen zwei Endplatten parallel zur Förderrichtung bezeichnet. Eine "Vorschublänge" kann so verstanden werden, dass es die vorgeschobene Länge eines Bandmaterials eines Vorschubs pro Taktzyklus. Hierin wird die Vorschublänge meist als Synonym zur Länge des Vorschubs verwendet.

### Figurenbeschreibung

Im Folgenden werden nur einige mögliche Ausführungsformen der Erfindung im Detail beschrieben. Jedoch ist die vorliegende Erfindung nicht auf diese beschränkt und eine Vielzahl von anderen Ausführungsformen ist anwendbar, ohne vom Umfang der Erfindung abzuweichen.

Die vorgestellten Ausführungsformen können auf vielfache Weise modifiziert und miteinander kombiniert werden, wann immer sie kompatibel sind, und bestimmte Merkmale können weggelassen werden, soweit sie entbehrlich erscheinen. Insbesondere können die offenbarten Ausführungsformen durch Kombination bestimmter Merkmale einer Ausführungsform mit einem oder mehreren Merkmalen einer anderen Ausführungsform modifiziert werden.

In den gesamten vorliegenden Figuren und der Beschreibung beziehen sich die gleichen Bezugszeichen auf die gleichen Elemente, teilweise sind aus Übersichtsgründen einige Bezugszeichen weggelassen worden und/oder Bezugszeichen für die gleichen Bauteile wurden mit einem hochgestellten Strich versehen. Die Figuren sind möglicherweise nicht maßstabsgetreu, und die relative Größe, Proportionen und Darstellung von Elementen in den Figuren können zur Klarheit, Veranschaulichung und Zweckmäßigkeit übertrieben sein.

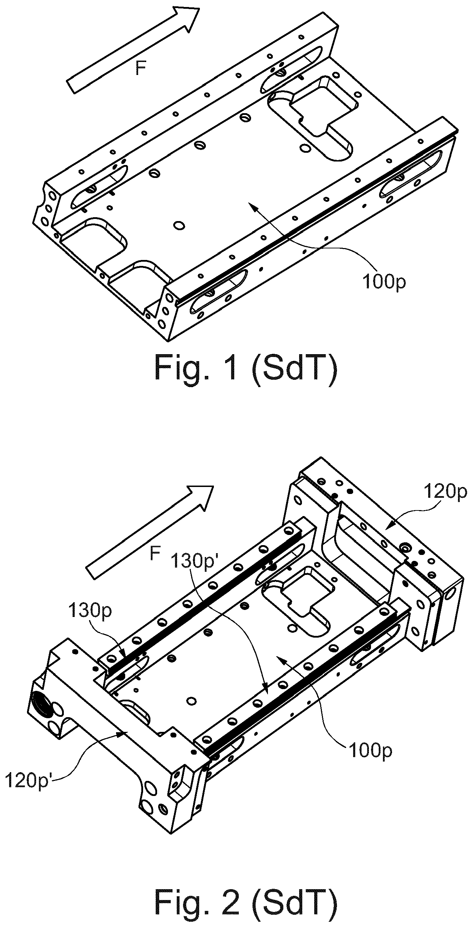

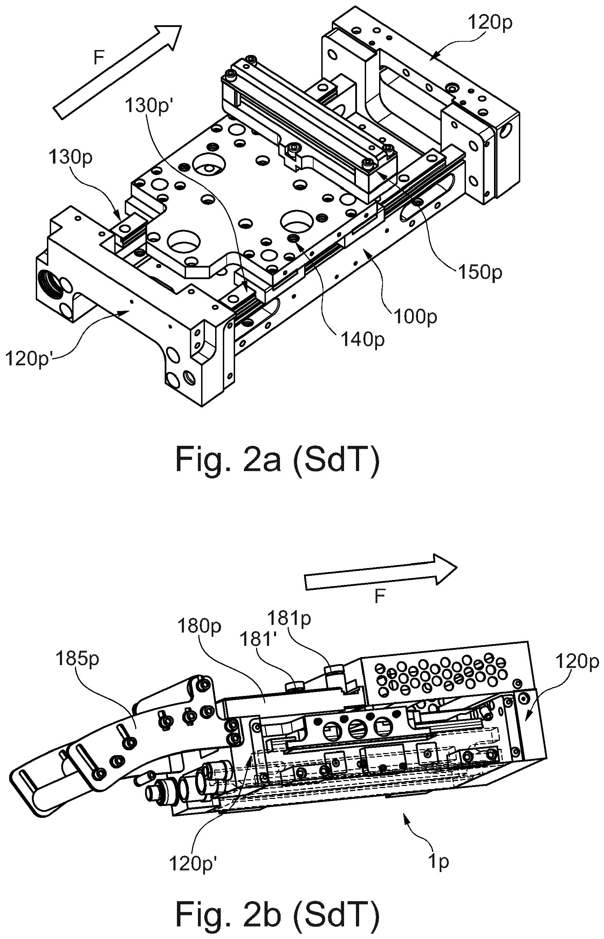

**Fig. 1 und 2** zeigen einen herkömmlichen Grundkörper 100p eines herkömmlichen Vorschubs, wie aus dem Stand der Technik bekannt ist.

Der Grundkörper 100p ist integral und u-förmig ausgeführt und lässt sich an den Stirnseiten (oben rechts und unten links in der Abbildung) lediglich an Endplatten 120p, 120p' (Fig. 2) montieren. Ebenfalls sind zwei Führungsschienen 130p, 130p' dargestellt, die entlang der Längsrichtung Grundkörpers 100p an dem Grundkörper 100p befestigt sind. Die Längsrichtung F des Grundkörpers 100p entspricht der Förderrichtung F des Bandmaterials.

Die Förderrichtung F ist bei herkömmlichen Vorschüben bedingt durch die Konstruktion der Bauteile (unter anderem durch die Konstruktion des Grundkörpers 100p) fest definiert und kann nicht verändert werden. Dies ist in den Figuren durch den Pfeil F mit lediglich einer Spitze dargestellt.

**Fig. 2a** zeigt den herkömmlichen Grundkörper 100p aus Fig. 2 mit weiteren Bauteilen eines herkömmlichen Vorschubs, wie aus dem Stand der Technik bekannt ist. Dargestellt ist zusätzlich eine Wagenplatte 140p und eine Haltevorrichtung 150p.

Die Endplatten 120p, 120p' sind unterschiedlich ausgeführt. Die erste Endplatte 120p' ist dazu eingerichtet auf einer ersten Seite des Grundkörpers 100p mit einer entsprechenden Haltevorrichtung (nicht dargestellt) Bandmaterial aufzunehmen. Die zweite Endplatte 120p ist dazu eingerichtet auf einer zweiten Seite des Grundkörpers 100p (ggfls. mit einer entsprechenden Haltevorrichtung) das Bandmaterial einem Folgeschnittwerkzeug zuzuführen. Zudem sind im Wesentlichen keine Befestigungslöcher über die äußere Umfangsfläche der Endplatten 120p, 120p' vorgesehen.

**Fig. 2b** zeigt einen herkömmlichen Vorschub 1p mit den herkömmlichen Bauteilen aus Fig. 2a und mit ferner weiteren Bauteilen, wie aus dem Stand der Technik bekannt ist. Wie zuvor beschrieben, ist auch in dieser Figur zu erkennen, dass die Förderrichtung konstruktiv fest vorgegeben ist. Zudem ist eine Auflageplatte 180p (für das Werkstück) und Führungsrollen 181p, 181p' zum Einführen des Werkstücks ersichtlich. Außerdem ist ein Rollenkorb 185p gezeigt.

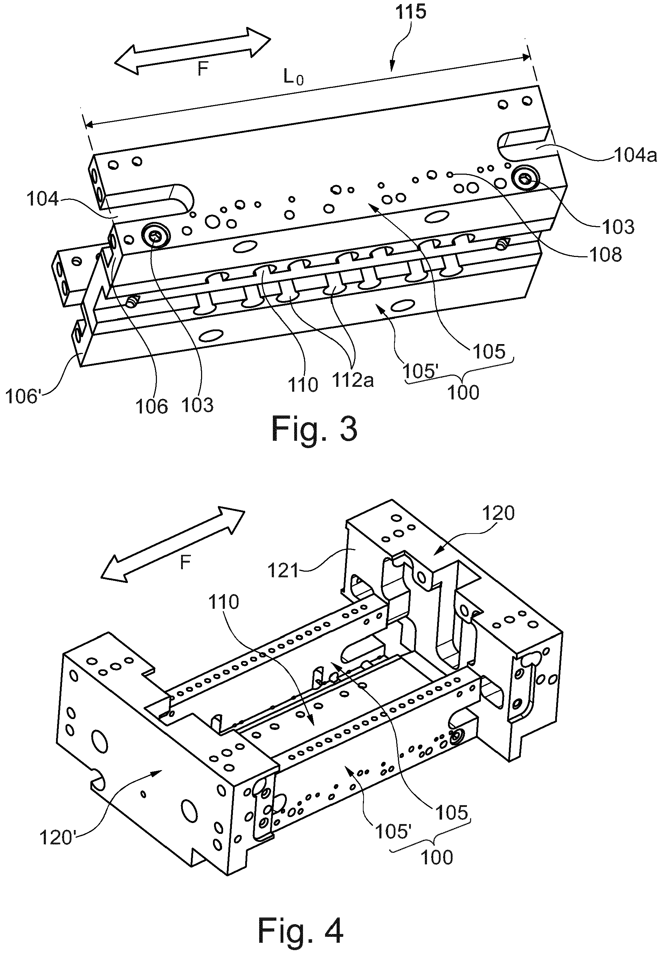

**Fig. 3** zeigt ein Paar Seitentragmodule 100 mit einem Grundtragmodul 110, die einen U-förmige Tragstruktur 115 eines Vorschubs ausbilden gemäß einer Ausführungsform der vorliegenden Erfindung.

Die Tragstruktur 115 ist mehrteilig ausgeführt und umfasst ein erstes Seitentragmodul 105 und ein zweites Seitentragmodul 105'. Beide Seitentragmodule sind gleichartig (wie hierin beschrieben). Zwischen den beiden Seitentragmodulen ist ein Grundtragmodul 110 angeordnet, mit der die beiden Seitentragmodule 105, 105' lösbar verbunden sind.

Zur Befestigung sind erste Montagemittel 103, insbesondere zwei Befestigungslöcher 103 an beiden Seitentragmodulen 105, 105' vorgesehen, vorzugsweise an zwei in Längsrichtung F des Paars Seitentragmodule 100/des Grundtragmoduls 110 gegenüberliegenden Endbereichen. Durch die Befestigungslöcher 103 können beispielsweise Schrauben eingeführt werden, die mit dem Grundtragmodul 110 in Eingriff kommen. Auf diese Weise kann eine ausreichend stabile Befestigung sichergestellt werden. Auch sind die Seitentragelemente 105, 105' untereinander austauschbarmit dem Grundtragmodul 110 lösbar verbindbar.

Die Figur zeigt ferner eine Länge Lo des Paars Seitentragmodule. Die Länge beträgt vorzugsweise 110 bis 150 mm, am meisten bevorzugt 120 bis 140 mm oder gar 130 mm. In diesem Beispiel entspricht die Länge des Grundtragmoduls 110 ebenso der Länge Lo (da lediglich ein Paar Seitentragmodule 100 umfasst ist).

Ein Seitentragmodul 105, 105' weist an beiden Stirnflächen 106 jeweils eine U-förmige Aussparung 140, 140a auf. Die Schenkel der U-förmigen Aussparung 140, 140a sind parallel zur Förderrichtung F angeordnet sind. Durch diese Aussparungen 140, 140a können Kabel und/oder Schläuche (z.B. Pneumatik-Schläuche) vom Inneren des Vorschubs nach außen und/oder umgekehrt geführt werden. Dies bietet den Vorteil, dass die Kabel und/oder Schläuche bereits an beiden Enden angeschlossen werden können, und anschließend seitlich durch die Aussparung 140, 140a eingelegt werden können. In herkömmlichen Vorschüben müssen die Kabel und/oder Schläuche durch umfänglich verschlossene Öffnungen eingeführt werden (in Fig. 1, 2 und 3 durch die ovale Öffnungen in den seitlichen Wänden zu erkennen).

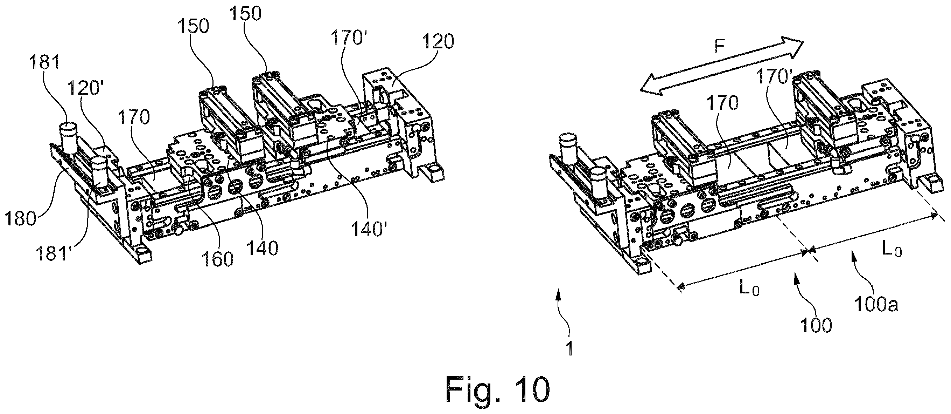

Ein Seitentragmodul 105, 105' weist ferner an der seitlichen Außenfläche (außen, da nicht zum Innern der U-förmigen Tragstruktur 115 gerichtet) eine Vielzahl an Gewindebohrungen 108 auf. Diese Gewindebohrungen 108 sind in regelmäßigen Abständen angeordnet und dienen zur Befestigung weiterer Bauteile des Vorschubs. Auf diese Weise kann ein Sensor, beispielsweise ein Linearsensor, in flexiblen (axialen) Abständen lösbar mit dem Seitentragmodul 105, 105' verbunden werden (in Fig. 10 ist dies angedeutet). Es ist zu erkennen, dass die rechte Aussparung 104a in Längsrichtung etwas kürzer ist als die linke Aussparung 140. Somit kann beispielsweise ein Sensor mehr zur Seite der rechten Aussparung 140a hin angeordnet werden.

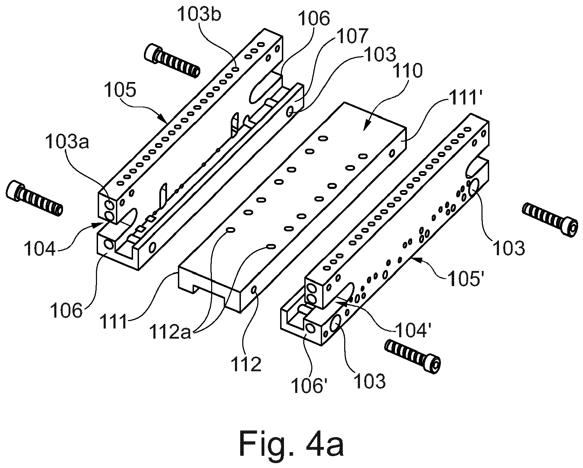

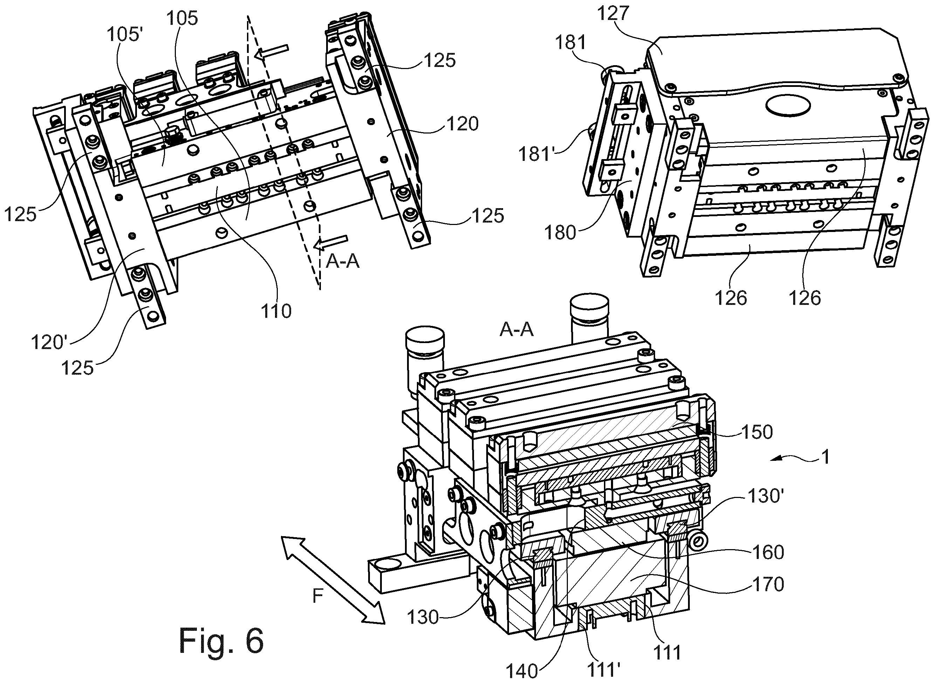

Das Grundtragmodul 110 weist eine Vielzahl von zweiten Montagemitteln (z.B. Befestigungslöchern) 112a auf. Beispielhaft sind zwei Befestigungslöchern 112a in Fig. 3 und 4a gekennzeichnet. Die zweiten Montagemittel 112a sind paarweise in (regelmäßigen) Abständen entlang der Förderrichtung F angeordnet sind. Diese dienen dazu eine Antriebseinheit 170 (Fig. 6) in flexiblen (axialen) Abständen lösbar mit dem Grundtragmodul 110 zu verbinden.

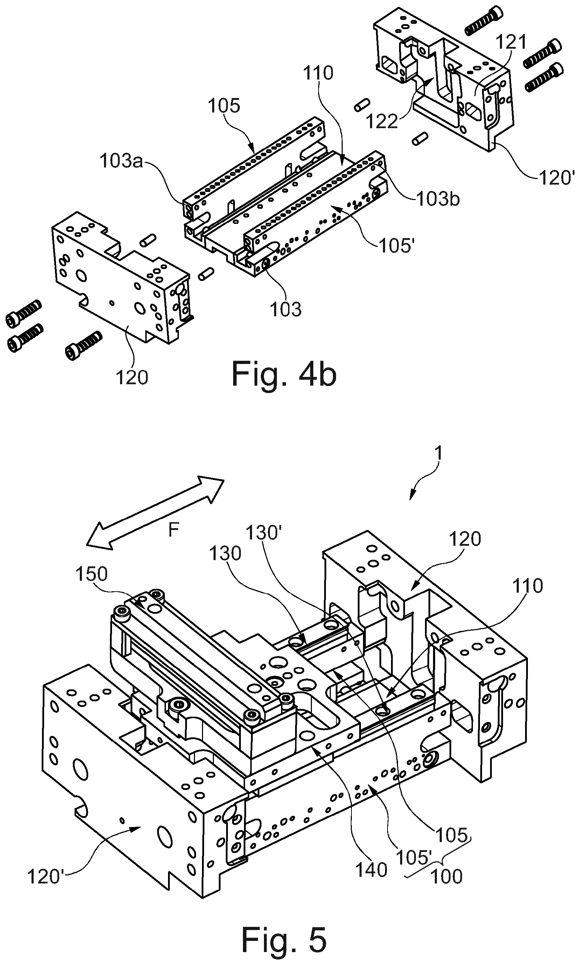

**Fig. 4** zeigt die Tragstruktur und das Paar Seitentragmodule 100 aus Fig. 3 mit weiteren Bauteilen eines Vorschubs gemäß einer Ausführungsform der vorliegenden Erfindung.

Zusätzlich zu den in Fig. 3 dargestellten Bauteilen sind eine erste 120 und eine zweite 120' gleichartige Endplatte 120, 120' dargestellt. Die Endplatten 120, 120' sind an einem ersten und einem zweiten Ende des Paars Seitentragmodule 100, bzw. an gegenüberliegenden Seiten der U-förmigen Tragstruktur 115 in Längsrichtung F befestigt.

Wie anhand der Figur ersichtlich ist, weisen die Endplatten 120, 120' gegenüber herkömmlichen Endplatten 120p (Fig. 1, 2) eine Vielzahl an Befestigungslöchern auf. Insbesondere befindet sich diese Vielzahl an Befestigungslöchern im Wesentlichen über die gesamte äußere Fläche der Endplatten (z.T. symmetrisch) verteilt. Dies ermöglicht eine flexible und modulare Bauweise der Endplatten 120, 120'.

**Fig. 4a** zeigt zwei Seitentragmodule 105, 105' eines Paars Seitentragmodule 100, 100a, 100b und ein Grundtragmodul 110 in einer Explosionsansicht.

Es sind zwei Stirnflächen 106, 106 des Seitentragmoduls 105 an gegenüberliegenden Enden (in Längsrichtung) des Seitentragmoduls 105 gezeigt, an die zwei Endplatten 120 (nicht dargestellt) lösbar montiert werden kann. Es können auch eine Endplatte und ein Seitentragmodul 105 eines weiteren Paars Seitentragmodule 100a an die Stirnflächen 106, 106 lösbar montiert/bzw. angeordnet werden. Es können auch zwei Seitentragmodule von zwei weiteren Paaren Seitentragmodule 100a, 100b an die Stirnflächen 106, 106 angeordnet werden. Die Stirnflächen sind somit für zumindest zwei Funktionen eingerichtet.

Die Seitentragmodule 105, 105' weisen an ihren Stirnflächen 106, 106' zweite Montagemittel 103a auf (in der Figur lediglich an einer Stirnfläche 106 eines Seitentragelements 105 gekennzeichnet). Diese sind für die lösbare Verbindung mit der Endplatte eingerichtet. Für die zweite Funktion der Stirnflächen 106, sind die Stirnflächen eben ausgeführt, um bündig aneinander abschließen zu können. Zudem sind die U-förmigen Aussparungen 140, 140a so gestaltet, dass diese bei einer Aneinanderreihung von Seitentragmodulen in Längsrichtung einen kontinuierlichen Abschluss bilden (ohne Sprünge).

Die Seitentragmodule 105, 105' sind länglich und bilden im Wesentlichen ein U-förmiges Profil mit unterschiedlich langen Schenkeln (der nach innen gerichtete Schenkel ist recht kurz). Der kleinere Schenkel jedes Seitentragmoduls schließt mit der nach innen gerichteten Fläche 107 im Wesentlichen bündig mit dem Grundtragmodul 110, insbesondere mit der Fläche 111, 111' ab.

Die beiden Seitentragmodule 105, 105' kann an der Seitenfläche 107 lösbar mit dem Grundtragmodul 110 über die Seiten 111, 111' montiert werden. Hierzu weist das Grundtragmodul 110 erste Montagemittel 112 an beiden quer zur Förderrichtung angeordneten Seiten 111, 111' auf, die zur kraftschlüssigen Verbindung zu den ersten Montagemitteln 103 der Seitentragmodule 105, 105' eingerichtet sind.

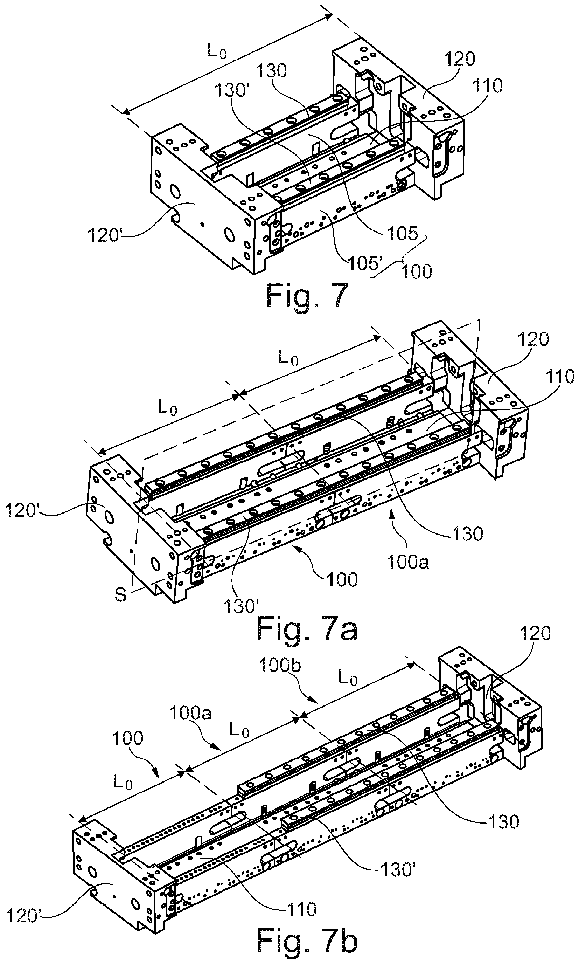

Die Seitentragmodule 105, 105' weisen ferner dritte Montagemittel 103b auf. Mit diesen kann eine Führungsschiene 130 (Fig. 5) lösbar mit einem Seitentragmodul 105 verbunden werden. Die dritten Montagemittel 103b sind in einer Vielzahl vorhanden und ermöglichen so eine flexible Befestigung der Führungsschiene. Die Führungsschiene 130 und die dritten Montagemittel 103b der Seitentragmodule 105, 105' sind so eingerichtet, dass die Führungsschiene 130 gleichzeitig mit mehreren in Förderrichtung angeordneten Seitentragmodulen 105, 105' von Paaren von Seitentragmodulen 100, 100a, 100b verbunden werden kann (Fig. 7a, 7b).

**Fig. 4b** zeigt Fig. 4 in einer Explosionsansicht.

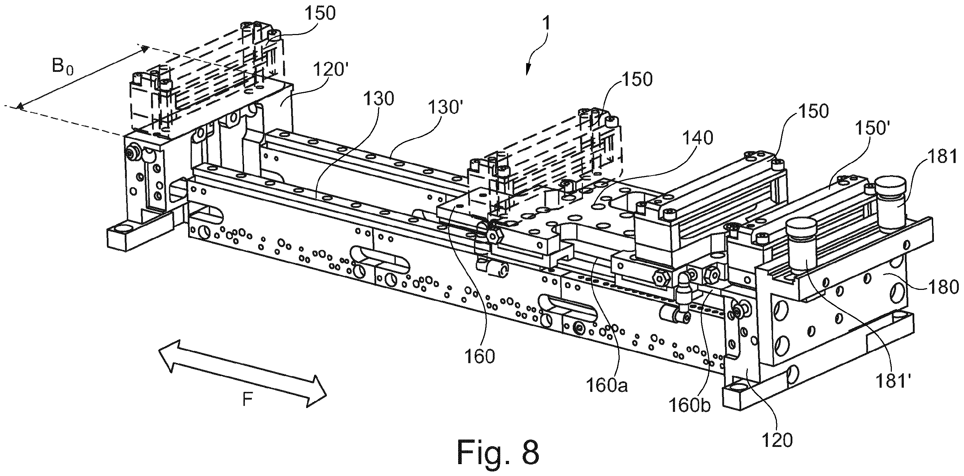

Die Figur zeigt eine Aussparung 122 der Endplatte 120' entlang der Förderrichtung (gleiches gilt für die Endplatte 120), die im Wesentlichen in der Mitte der Endplatte 120' angeordnet ist. Diese Aussparung 122 ist dazu eingerichtet, das Fördermodul (bspw. die Wagenplatte 140, Haltevorrichtung 150 und/oder eine Magnetschiene 160) im Betrieb des Vorschubs zumindest zum Teil zu empfangen (vgl. Fig. 5, 8). Somit wird eine vergrößerte Weglänge der Wagenplatte ermöglicht.

Die Figur zeigt ferner die Verbindung der zweiten Montagemittel 103a an den Stirnflächen der Seitentragmodule 105, 105' mit den Endplatten 120. Die Verbindung kann über Stifte und oder Schrauben erfolgen.

**Fig. 5** zeigt die Tragstruktur aus Fig. 4 mit weiteren Bauteilen eines Vorschubs gemäß einer Ausführungsform der vorliegenden Erfindung. Es ist eine Wagenplatte 140 dargestellt (die vom Fördermodul umfasst ist), die dazu eingerichtet ist zwischen den zwei Endplatten 120, 120' bewegt zu werden. Insbesondere wird die Wagenplatte 140 auf und entlang der Führungsschienen 130, 130' bewegt, die entlang der Längsrichtung des Paars Seitentragmodule 100 an den Seitentragmodulen 105, 105' befestigt sind.

Die Förderrichtung F kann durch die Ausgestaltung der Vorschubbauteile unter Verwendung derselben Vorschubbauteile in beide, anhand der Pfeile dargestellten Richtungen, orientiert sein. Beispielsweise kann dieselbe Auflageplatte 180 (Fig. 6) auf der rechten und der linken Endplatte 120, 120' lösbar befestigt werden. Hierzu weisen die Auflageplatten 180 und die Endplatte 120, 120' zueinander kongruente Befestigungsmittel auf, um die Bauteile lösbar miteinander montieren zu können.

Fig. 6 zeigt einen Vorschub 1 mit den Bauteilen aus Fig. 5 und mit weiteren Bauteilen eines Vorschubs 1 gemäß einer Ausführungsform der vorliegenden Erfindung. Es sind drei perspektivische Ansichten des Vorschubs 1 dargestellt.

Oben links in dieser Figur ist eine Ansicht von unten dargestellt, sodass im Wesentlichen eine Rückseite des Vorschubs zu sehen ist. Im Betrieb des Vorschubs 1 würden bei dieser Ausführungsform die sichtbaren Flächen des Grundtragmodul 110, der Seitentragmodule 105, 105', der Endplatten 120, 120' und der Montagefüße 125 im Wesentlichen auf dem Boden stehen. Es sind vier Montagefüße 125 dargestellt, die jeweils senkrecht nach außen gerichtet von den beiden Endplatten 120, 120' hervorstehen und lösbar an den Endplatten 120, 120' montiert sind.

Oben rechts in dieser Figur ist eine ähnliche perspektivische Ansicht von schräg unten dargestellt. Hierin sind weitere optionale seitliche Abdeckplatten 126 und eine optionale obere Abdeckplatte 127 gezeigt. Außerdem ist die Auflageplatte 180 umfassend zwei Führungsrollen 181, 181' dargestellt.

Unten in dieser Figur ist eine perspektivische Schnittdarstellung der Ebene A-A (oben links in der Figur gekennzeichnet) dargestellt. Auf diese Weise wird die Anordnung der Wagenplatte 140, der Magnetschiene 160, der Antriebseinheit 170 und der Seitentragmodule 105, 105' sowie des Grundtragmoduls 110 ersichtlich. Die Antriebseinheit 170 ist von den Seitentragmodulen 105, 105' lateral (seitlich) begrenzt und an dem Grundtragmodul 110 lösbar montiert (über zweite Montagemittel 112a des Grundtragmoduls 110). Die Magnetschiene 160 ist lösbar an der Wagenplatte 140 montiert. Ebenso sind die Halterungsvorrichtungen 150 lösbar mit der Wagenplatte (von oben) montiert. Es sind mehrere optionale Halterungsvorrichtungen 150 dargestellt.

Im Betrieb des Vorschubs 1 ist die Antriebseinheit 170 räumlich fixiert und treibt die Magnetschiene 160 an, die sich entlang der Führungsschienen 130, 130' bewegt und somit auch die Wagenplatte 140 und die Halterungsvorrichtungen 150 bewegt. Die zusammen beweglichen Bauteile können als Fördermodul aufgefasst werden. Die Ansicht gemäß der unteren Darstellung des Vorschubs 1 in dieser Figur entspricht einer üblichen Orientierung, wenn der Vorschub im Betrieb ist. Zudem sind für diese Ansicht die Förderrichtungen F für den Vorschub 1 dargestellt.

**Fig. 7** zeigt die Tragstruktur und das Paar Seitentragmodule 100 aus Fig. 4 mit weiteren Bauteilen eines Vorschubs gemäß einer Ausführungsform der vorliegenden Erfindung. Gegenüber Fig. 4 sind hierin noch die Führungsschienen 130, 130' dargestellt, die auf dem Paar Seitentragmodule 100 bzw. jeweils auf dem ersten 105 und dem zweiten 105' Seitentragmodul lösbar verbunden sind.

Das Paar Seitentragmodule 100 stellt einen Teil der U-förmigen Tragstruktur dar. Wie hierin beschrieben, sind die Seitentragmodule 105, 105' dazu eingerichtet, durch Aneinanderreihung von ein oder mehreren Paaren Seitentragmodule 100, 100a, 100b entsprechend ein oder mehrere Vorschübe mit unterschiedlichen Längen zu bilden. Dies ist insbesondere im Vergleich der Fig. 7, 7a und 7b dargestellt.

**Fig. 7a** zeigt die Ausführungsformen von Fig. 7, wobei ein weiteres Paar Seitentragmodule 100a gemäß einer Ausführungsform der vorliegenden Erfindung umfasst ist. Aus Übersichtsgründen sind die Seitentragmodule 105, 105' in dieser Figur nicht gesondert gekennzeichnet, sondern lediglich die Paare Seitentragmodule 100, 100a.

Eine Ebene S ist durch das gestrichelte Viereck angedeutet. Ein Teil der dargestellten Bauteile des Vorschubs ist symmetrisch zu der Ebene S. Ebenso sind die hierin beschriebenen Montagemittel zumindest teilweise symmetrische zur Ebene S. Dies gilt beispielsweise für die ersten Montagemittel 103 der Seitentragmodule 105, 105'.

**Fig. 7b** zeigt die Ausführungsformen von Fig. 7a, wobei ein weiteres Paar Seitentragmodule 100b gemäß einer Ausführungsform der vorliegenden Erfindung umfasst ist.

Die Länge Lo des Paars Seitentragmodule (dies entspricht der Länge eines Seitentragmoduls) 100, 100a, 100b ist, wie hierin beschrieben, gleich. Fig. 7 zeigt folglich einen Vorschub mit einer Länge von in etwa 130 mm. Fig. 7a zeigt einen Vorschub mit einer Länge von in etwa 260 mm. Fig. 7b zeigt einen Vorschub mit einer Länge von in etwa 390 mm. Die Endplatten 120, 120' sind in allen Ausführungsformen Fig. 7, 7a und 7b gleichartig (identisch).

Die Endplatte 120 ist mittels ihrer Frontfläche 121 (das Bezugszeichen ist in Fig. 4 und 4b dargestellt) mit den Stirnflächen 106, 106' (die Bezugszeichen sind in Fig. 3 und Fig. 4a dargestellt) des Paars Seitentragmodule 100b lösbar montiert. Das Paar Seitentragmodule 100b ist an den nach innen gerichteten Seitenflächen 107, 107' (die Bezugszeichen sind in Fig. 4a dargestellt) lösbar mit dem Grundtragmodul 110 (an einer zur Ebene S, vgl. Fig. 7a, gewandten Fläche 111, 111', die Bezugszeichen sind in Fig. 4a und Fig. 6 dargestellt) montiert und an das Paar Seitentragmodule 100a (an Stirnflächen 106, 106' der Paare Seitentragmodule 100b, 100a) angeordnet.

Gleiches gilt für die verbleibenden Paare Seitentragmodule: Das Paar Seitentragmodule 100a ist lösbar mit dem Grundtragmodul 110 (an einer zur Ebene S, vgl. Fig. 7a, gewandten Fläche 111, 111') und an das Paar Seitentragmodule 100 (an Stirnflächen 106, 106' der Paare Seitentragmodule 100a, 100) angeordnet. Das Paar Seitentragmodule 100 ist lösbar mit dem Grundtragmodul 110 (an einer zur Ebene S, vgl. Fig. 7a, gewandten Fläche 111, 111') und mit der Endplatte 120' (an Stirnflächen 106, 106' des Paars Seitentragmodule 100) montiert. Es ist von Vorteil, dass auf diese Weise unter Verwendung gleichartiger Bauteile, flexibel, schnell und kosteneffizient unterschiedliche Vorschübe gebildet werden können.

In Fig. 7, 7a und 7b ist zu erkennen, dass sich zwei Seitentragmodule 105, 105' zu einem Paar Seitentragmodule 100 bilden, wobei das Grundtragmodul 110 dazwischenliegend angeordnet ist. Das Paar von Seitentragmodulen 105, 105' bildet mit dem Grundtragmodul 110 im Wesentlichen eine U-förmige Tragstruktur und bietet Stabilität des Vorschubs.

Es ist ferner zu erkennen, dass bei mehreren Paaren von Seitentragmodulen (bspw. 2, 3 oder mehre) die Seitentragmodule 105, 105' im Zusammenbau paarweise durch das dazwischenliegende einzelne Grundtragmodul 110 rechtwinklig zur Förderrichtung beabstandet und reihenweise entlang ihrer Längsrichtung an Stirnflächen angeordnet sind. Es bilden sich folglich zwei Reihen aus. Die Reihen (die erste Reihe gebildet aus einem, zwei oder drei des Seitentragmoduls 105, die zweite Reihe gebildet aus einem, zwei oder drei des Seitentragmoduls 105') sind, wie hierin beschrieben, mit dem Grundtragmodul 110 lösbar montiert.

Das Grundtragmodul 110 ist bei jedem Vorschub einstückig ausgeführt und weist eine zur jeweiligen Länge der Tragstruktur passende Länge auf (1 × L0, 2 × L0, bzw. 3 × L0). Dies erhöht die Stabilität des Vorschubs.

Lediglich zur Veranschaulichung sind die Führungsschienen 130, 130' in Fig. 7b nicht durchgängig dargestellt. Es versteht sich, dass sich die Führungsschienen 130, 130' von der ersten 120 bis zur zweiten 120' Endplatte erstrecken und diese in manchen Fällen sogar kontaktieren.

**Fig. 8** zeigt die Ausführungsformen von Fig. 7b mit weiteren Bauteilen eines Vorschubs gemäß einer Ausführungsform der vorliegenden Erfindung. Gegenüber der Fig. 7b ist hierin eine Wagenplatte 140 ersichtlich, an der eine bewegliche Haltevorrichtung 150 lösbar montiert ist. Die Wagenplatte 140 ist beweglich entlang der Förderrichtung F eingerichtet. Es ist außerdem eine zweite bewegliche Haltevorrichtung 150 gestrichelt angedeutet, die optional vom Vorschub umfasst sein kann. Beispielsweise kann die zweite bewegliche Haltevorrichtung die Führung von Bandmaterial verbessern. Die gestrichelte bewegliche Haltevorrichtung 150 bedeutet jedoch ebenso, dass lediglich eine bewegliche Haltevorrichtung an der gestrichelten Position vorgesehen ist. Die Position in Längsrichtung ist bedingt durch die Wagenplatte 140 flexibel.

Außerdem zeigt die Figur eine Auflageplatte 180, die dazu eingerichtet ist, an beiden Endplatten 120, 120' befestigt werden zu können. Dargestellt ist eine Ausführungsform, bei welcher die Auflageplatte 180 lediglich an einem Ende des Vorschubs (rechts) angeordnet ist. Die Förderrichtung F kann durch die konstruktive Ausgestaltung der Vorschubbauteile unter Verwendung derselben Vorschubbauteile in beide, anhand der Pfeile dargestellten Richtungen, orientiert sein. Mit der dargestellten Anordnung der Auflageplatte 180 ist die Förderrichtung F in der Figur nach links orientiert.

Die Auflageplatte 180 umfasst zwei Führungsrollen 181, 181', die dazu eingerichtet sind, das Bandmaterial zu führen und der fixierten Haltevorrichtung 150' zuzuführen und sodann der auf der Wagenplatte 140 befestigten, beweglichen Haltevorrichtung 150 zuzuführen (und optional einer weiteren beweglichen Haltevorrichtung 150 zuzuführen).

Es sind drei gleichartige Magnetschienen 160, 160a, 160b dargestellt, die in Längsrichtung (in Förderrichtung F) angrenzend aneinander mit der Wagenplatte 140 befestigt sind und sich folglich mit der Wagenplatte 140 mitbewegen.

Die Wagenplatte 140 wird über eine Antriebseinheit 170 (in dieser Figur nicht dargestellt) angetrieben. Die Antriebseinheit 170 ist zwischen zwei Seitentragmodulen 105, 105' eines Paars Seitentragmodule 100, 100a, 100b und oberhalb des Grundtragmoduls 110 angeordnet (vom Steg des U-förmigen Profils der Tragstruktur zur Öffnung des U-förmigen Profils hingewandt). Vorzugsweise ist die Antriebseinheit 170 ein Linearmotor. Die elektrische Wicklung ist üblicherweise räumlich fixiert und bewirkt durch den elektrischen Stromfluss eine Bewegung der Magnetschienen 160, 160a, 160b (diese können einen Permanentmagneten umfassen).

In einigen Ausführungsformen hierin kann ein gegenüber herkömmlichen Bauweisen von Vorschüben vergrößerter Überdeckungsbereich von Antriebseinheit 170 und Magnetschienen in Förderrichtung F erzielt werden.

Dies verbessert die Effizienz der Bewegung. Zudem bietet die Anordnung den Vorteil, dass das Gewichtsverhältnis von Magnetschienen 160, 160a, 106b zur Antriebseinheit 170 gering ist und somit eine geringe Masse beschleunigt werden muss.

In manchen Fällen, insbesondere wenn längere Fahrwege der Wagenplatte 140 von Nöten sind, kann es sinnvoll sein, die Antriebseinheit an der Wagenplatte 140 und die Magnetschiene an dem Paar Seitentragmodule/dem Grundtragmodul zu befestigen (beispielsweise um einen Überdeckungsbereich sicherzustellen). In solchen Fällen kann eine Kabelschleppe vorgesehen sein, um ein beispielsweise ein Stromkabel der Antriebseinheit zu führen (die Antriebseinheit würde sich in solchen Fällen bei jedem Hub bewegen).

In den Ausführungsformen der Fig. 3 bis 8 beträgt die Breite B0 der Endplatte 120 (und der identischen Endplatte 120') in etwa 70 mm bis 150 mm, bevorzugt 90 mm bis 140 mm, ferner bevorzugt 100 mm bis 125 mm, am meisten bevorzugt 110 mm bis 115 mm oder gar 112 mm. Diese Breite kann auch einer Installationsbreite der Vorschübe entsprechen. Es kann sein, dass die Montagefüße 125 seitlich etwas weiter über die Breite der Endplatte 120 hervorstehen. Die Breite der Haltevorrichtungen 150 beträgt in etwa 98 mm. Es können jedoch auch breitere Haltevorrichtungen 150 vorgesehen werden, je nach Anwendungsfall.

Lediglich zur Veranschaulichung sind die Führungsschienen 130, 130' in dieser Figur nicht durchgängig dargestellt. Es versteht sich, dass sich die Führungsschienen 130, 130' von der ersten 120 bis zur zweiten 120' Endplatte erstrecken und diese in manchen Fällen sogar kontaktieren.

Auch wenn nicht gesondert in der Figur dargestellt, kann der Vorschub 1 auch einen Rollenkorb umfassen, der so eingerichtet ist, dass er flexibel an, beispielsweise einer Endplatte 180 montierbar ist.

In den bisher gezeigten Ausführungsformen beträgt die Durchlassbreite der Haltevorrichtungen 150, 150' in etwa 60 mm bis 120 mm, bevorzugt 65 mm bis 95 mm, ferner bevorzugt 70 mm bis 90 mm, am meisten bevorzugt 75 mm bis 85 mm oder gar 80 mm.

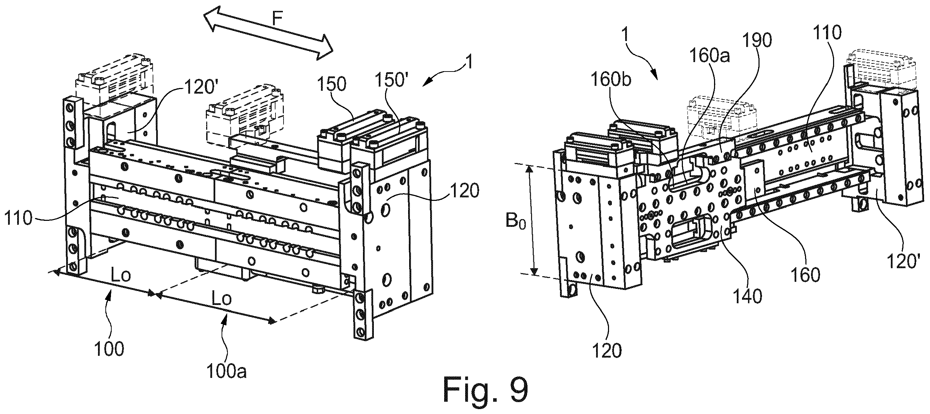

**Fig. 9** zeigt einen Vorschub mit zwei 100, 100a (links) und einen Vorschub mit drei 100, 100a, 100b (rechts) Paar Seitentragmodule gemäß zwei Ausführungsformen der vorliegenden Erfindung.

Bezüglich der Paare Seitentragmodule 100, 100a, 100b der Förderrichtung F, des Grundtragmoduls 110, sowie bezüglich der anderen Bauteilen (auch wenn nicht explizit genannt) gilt das hierin Beschriebene, sofern technisch sinnvoll. Zudem versteht sich, dass ebenso eine Ausführungsform eines Vorschubs 1 mit lediglich einem Paar Seitentragmodule 100 möglich und von der Erfindung umfasst ist. Aus Übersichtsgründen sind in der rechten Ausführungsform der Fig. 9 die Bezugszeichen für die drei Paare Seitentragmodule 100, 100a, 100b weggelassen worden (in der linken Ausführungsform sind die zwei Paare Seitentragmodule 100, 100a samt ihrer Länge Lo gekennzeichnet). Das Grundtragmodul 110 der linken Ausführungsform weist eine Länge von 2 × L0, das Grundtragmodul 110 der rechten Ausführungsform eine Länge von 3 × L0 auf.

Fig. 9 zeigt mindestens ein Fördermodul (umfasst die Wagenplatte 140, die Magnetschienen 160, 160a, 160b und die Haltevorrichtung 150), das in Förderrichtung F bewegbar auf der U-förmigen Tragstruktur angeordnet ist. Die Haltevorrichtung 150 ist länglich, wobei die Längsachse der Haltevorrichtung 150 im Wesentlichen parallel zur Normalen der Wagenplatte 140 verläuft. Die Magnetschienen 160, 160a, 160b sind flächig und mit der Wagenplatte 140 so verbunden, dass ihre Normalen im Wesentlichen parallel verlaufen (in der rechten Ansicht zeigt die Normale schräg nach rechts zum Betrachter hin).

Die Endplatte 120 dieser Ausführungsform ist identisch zu den zuvor beschriebenen Endplatten 120, 120'. Folglich entspricht die Breite B0 der Endplatte 120 in der in dieser Figur gezeigten Ausführungsform (auch als "rotierte" Ausführungsform bezeichnet) einer Höhe. Die in dieser Figur eingezeichnete Abmessung B0 entspricht einer zweiten Abmessung, die im Wesentlichen rechtwinklig zur Normalen der Wagenplatte 140 und zur Förderrichtung F verläuft. Die Endplatten 120 weisen auch eine erste Abmessung entlang der Normalen der Wagenplatte 140 auf.

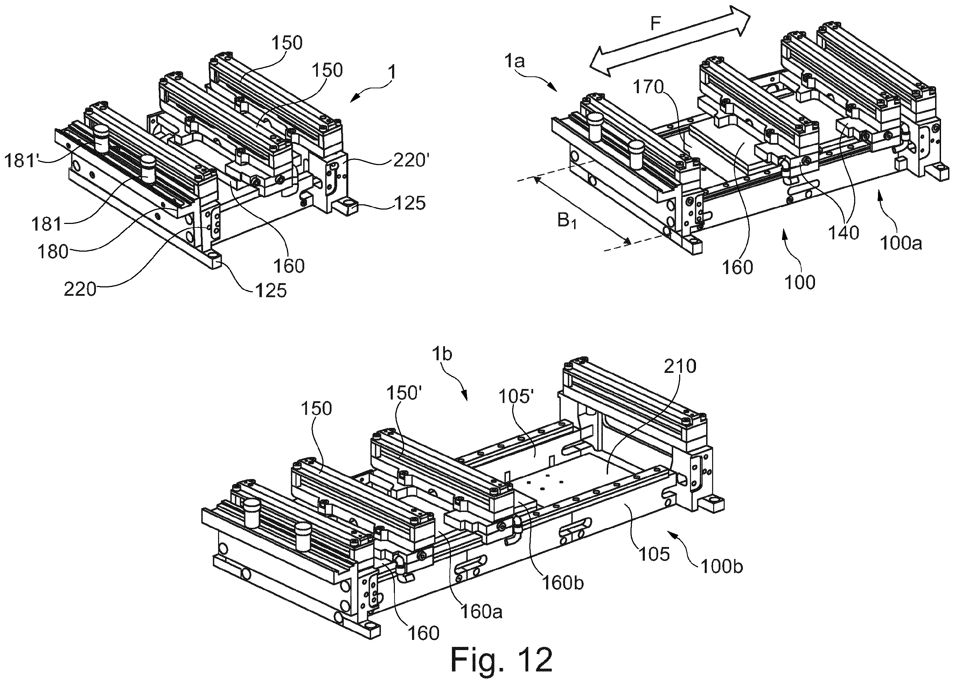

Beispielsweise weisen die horizontalen/liegenden Ausführungsformen der Vorschübe eine Höhe (in Fig. 8 vertikal betrachtet) von in etwa 94 mm inklusive Haltevorrichtungen 150 auf (in etwa 102 mm inklusive Abdeckplatten). Die Höhe der Endplatte 120 beträgt in etwa 58 mm. Diese Höhe gelten ebenso für eine breitere Ausführungsform der horizontalen/liegenden Vorschübe (vgl. Fig. 12). Die Breite der rotierten Ausführungsformen orientiert sich an den Höhen der horizontalen/liegenden Ausführungsformen und ist folglich wesentlich schmaler als die Breite der horizontalen/liegenden Ausführungsformen. Die Höhe der rotierten Ausführungsformen (in Fig. 9 in Richtung B0 gemessen) beträgt in etwa 148 mm inklusive Haltevorrichtungen 150 (in etwa 156 mm inklusive Abdeckplatten).

Bei den rotierten Ausführungsformen der Vorschübe sind die zuvor beschriebenen Vorschübe um etwa 90° (oder um etwa -90° oder ähnlich) rotiert und die Haltevorrichtungen 150, 150' sind an einer schmalen Seite des Vorschubs lösbar montiert.

Es ist von Vorteil, dass die Bauteile des Vorschubs aufgrund ihrer modularen Beschaffenheit, die gleichen Bauteile der anderen hierin beschriebenen Ausführungsformen sind. Dies gilt insbesondere für die Paare Seitentragmodule 100, 100a, 100b, das Grundtragmodul 110, die Wagenplatte 140, die Endplatte 120, die Führungsschiene(n) 130, die Magnetschiene(n) 160, die Antriebseinheit 170, sowie die nicht gesonderte gekennzeichneten Führungswagen, die auf den Führungsschienen 130, 130' geführt werden. Folglich können die modularen Bauteile in größeren Stückzahlen produziert werden und flexibel zusammengebaut werden.

Ein weiterer Vorteil der rotierten Ausführungsform besteht darin, dass der Vorschub mit der unteren Fläche des Grundtragmoduls 110, des Paars Seitentragmodule 100, 100a, 100b, der Endplatten 120 und/oder der Montagefüße (in der linken Ansicht dieser Figur ist die "untere Fläche" ersichtlich) an einer Wand befestigt werden kann.

Vorteilhaft kommen lediglich Haltevorrichtungen 150 mit geringerer Durchlassbreite zum Einsatz, beispielsweise im Bereich zwischen in etwa 20 mm bis 60 mm, bevorzugt 30 mm bis 50 mm, ferner bevorzugt 35 mm bis 45 mm, am meisten bevorzugt 38 mm bis 42 mm oder gar 40 mm. Somit sind die Haltevorrichtung entsprechend der anvisierten Vorschubanwendung angepasst und begünstigen den durch die Rotation geschaffenen Platzvorteil.

Unter Bezugnahme auf Fig. 4 wurde erläutert, dass die Endplatten 120, 120' eine Vielzahl an Befestigungslöchern aufweisen. Dies begünstigt, dass ein weiterer Betrieb des Vorschubs nach einer Rotation auf einfache Weise gewährleistet werden kann. So kann in dem rotierten Zustand vorteilhaft eine Befestigung von Haltevorrichtungen 150 an eine im rotierten Zustand nach oben gerichtete Fläche (die in Fig. 4 zu einer Seite gerichtet dargestellt ist) der Endplatte 120 ermöglicht werden.

Die Wagenplatte 140 und die bewegliche Haltevorrichtung 150 sind so eingerichtet, dass die Haltevorrichtung 150 in einer ersten Ausrichtung mit einer Oberseite der Wagenplatte 140 (vgl. Fig. 8) und in einer zweiten Ausrichtung mit einer Außenseite der Wagenplatte 140 lösbar verbunden werden kann (vgl. Fig. 9). Eine Greiferplatte 190 kann vom Vorschub umfasst sein, die lösbar mit der Wagenplatte 140 montiert ist und die Haltevorrichtung 150 aufnimmt. Somit ist kein Umbau der Wagenplatte 140 erforderlich.

**Fig. 10** zeigt einen Vorschub mit zwei Antriebseinheiten 170, 170' und zwei Paaren Seitentragmodule 100, 100a gemäß einer Ausführungsform der vorliegenden Erfindung in einer ersten Position der Wagenplatten (links) und einer zweiten Position der Wagenplatten (rechts).

Bezüglich der Paare Seitentragmodule 100, 100a, der Förderrichtung F, des Grundtragmoduls 110, sowie bezüglich der anderen Bauteilen (auch wenn nicht explizit genannt) gilt das hierin Beschriebene, sofern technisch sinnvoll. Zudem versteht sich, dass ebenso eine Ausführungsform eines Vorschubs 1 mit lediglich einem Paar Seitentragmodule 100 oder mit drei 100, 100a, 100b Paaren Seitentragmodule möglich ist.

Aus Übersichtsgründen sind in der linken Ansicht die Bezugszeichen für die Paare Seitentragmodule 100, 100a nicht dargestellt (in der rechten Ansicht sind die zwei Paare Seitentragmodule 100, 100a samt ihrer Länge L0 gekennzeichnet). Das Grundtragmodul 110 weist eine Länge von 2 × L0. Bezüglich der Breiten der Bauteile (insbesondere der Endplatte 120 und der Haltevorrichtungen 150, 150') gilt das hierin Beschriebene zu den Fig. 3 bis 8.

Im Folgenden wird im Wesentlichen auf die Unterschiede zu den vorherigen Ausführungsformen eingegangen.

Es sind zwei unabhängig voneinander bewegliche Fördermodule dargestellt. Die zwei Fördermodule umfassen jeweils eine der Wagenplatten 140, 140' (die gleichartig sind) und jeweils eine Haltevorrichtung 150 (ebenso gleichartig), die lösbar mit den jeweiligen Wagenplatten 140, 140' verbunden sind. Zudem sind zwei Antriebseinheiten 170, 170' lösbar mit dem Grundtragmodul 110 (in der Figur nicht gesondert gekennzeichnet, jedoch wie hierin beschrieben) montiert. Außerdem sind an jedem Wagenplatten 140, 140' Magnetschienen 160, 160' lösbar montiert. Zudem können auch zwei voneinander unabhängige Messsysteme verbaut werden.

Vorteilhaft kann jede Wagenplatte 140, 140' individuell angesteuert werden und einen individuellen Weg entlang der Förderrichtung F fahren.

Der Fördervorgang von Bandmaterial kann wie folgt verstanden werden: In einer auseinandergefahren Position (vgl. rechte Ansicht) greift die erste Haltevorrichtung 150 (in der rechten Ansicht wäre dies die linke Haltevorrichtung 150) das Bandmaterial und wird anschließend translatorisch/linear entlang der Förderrichtung F bis in etwa der Mitte des Vorschubs 1 über den Linearmotor 170 bewegt (diese Position der linken Haltevorrichtung ist in der linken Ansicht dargestellt). In der Mitte angelangt greift die zweite Haltevorrichtung 150 zu, übernimmt folglich die Kontrolle über das Bandmaterial und wird über den Linearmotor 170' zur anderen Seite des Vorschubs (in den Ansichten rechts) translatorisch bewegt.

Bei dieser Ausführungsform eines Vorschubs mit zwei Antriebseinheiten bedarf es keiner räumlich fixierten Haltevorrichtungen (wie sie bspw. in Fig. 9 angedeutet sind). Das Bandmaterial wird zumeist, vorzugsweise in jedem Zeitpunkt im Betrieb, von einer Zange gehalten, sodass eine räumlich fixierte Haltevorrichtung nicht notwendig ist.

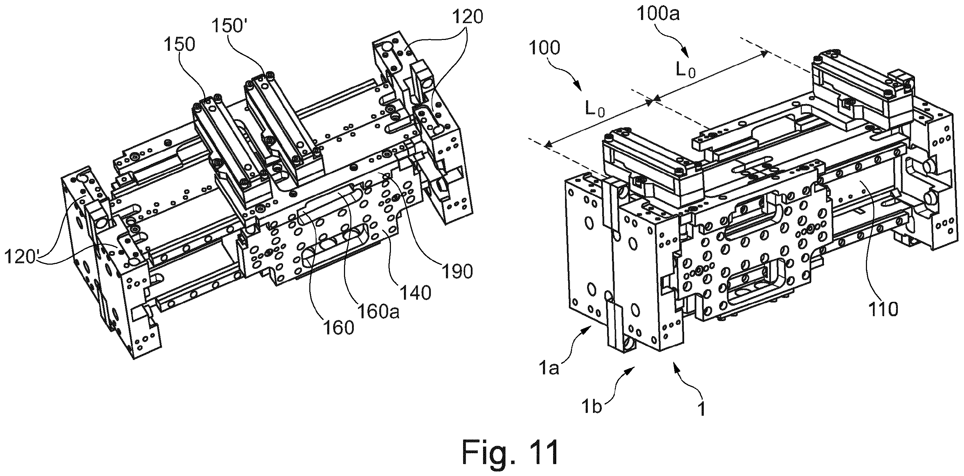

**Fig. 11** zeigt einen Vorschub 1b, der aus zwei rückseitig aneinander angeordneten Vorschüben 1, 1a gebildet ist gemäß einer Ausführungsform der vorliegenden Erfindung. Es ist eine erste Position der Wagenplatten (links) und eine zweite Position der Wagenplatten (rechts) gezeigt.

Die beiden rückseitig aneinander angeordneten und lösbar miteinander montierten Vorschübe 1, 1a sind in dieser Figur durch die Bezugszeichen 1 und 1a gekennzeichnet und bilden im Zusammenbau den Vorschub 1b.

Bezüglich der Paare Seitentragmodule 100, 100a, 100b der Förderrichtung F, des Grundtragmoduls 110, sowie bezüglich der anderen Bauteilen (auch wenn nicht explizit genannt) gilt das hierin Beschriebene, sofern technisch sinnvoll. Zudem versteht sich, dass ebenso eine Ausführungsform eines Vorschubs 1b mit lediglich einem Paar Seitentragmodule 100 oder mit drei 100, 100a, 100b Paaren Seitentragmodule möglich und von der Erfindung umfasst ist. Aus Übersichtsgründen sind in den beiden Ansichten manche Bezugszeichen weggelassen worden. Das Grundtragmodul 110 der Ausführungsform weist eine Länge von 2 × L0. Bezüglich der Breiten der Bauteile (insbesondere der Endplatte 120 und der Haltevorrichtungen 150, 150') gilt das hierin Beschriebene zu den Fig. 3 bis 8.

Im Folgenden wird im Wesentlichen auf die Unterschiede zu den vorherigen Ausführungsformen eingegangen.

Der Vorschub 1b umfasst eine Tragstruktur, die entlang der Förderrichtung ausgebildet ist und ein erstes und ein zweites Fördermodul (jedes Fördermodul umfasst jeweils eine Wagenplatte 140, eine Haltevorrichtung 150, und eine Greiferplatte 190) die in Förderrichtung bewegbar auf der Tragstruktur angeordnet sind. Es ist zu erkennen, dass sich die Fördermodule entlang der Förderrichtung zumindest zum Teil überlappen können (in der ersten Position überlappen sich die Fördermodule zu in etwa 50%, in der zweiten Position zu einem etwas geringeren Anteil. Es gibt Position, bei denen sich die Fördermodule zu 100% überlappen).

Jeder Vorschub 1, 1a beinhaltet ein eigenständiges Grundtragmodul 110. Folglich beinhaltet der Vorschub 1b zwei Grundtragmodule 110. Ebenso beinhaltet der Vorschub 1b zwei Wagenplatten 140 (in der Figur ist lediglich in der linken Ansicht die vordere Wagenplatte 140 des Vorschubs 1 gekennzeichnet). Die Haltevorrichtungen 150, 150' sind, vergleichbar zur rotierten Ausführungsform (Fig. 9) an einer schmalen Seite des Vorschubs lösbar montiert. Bedingt durch die Anordnung des Vorschubs 1b behindern sich die Wagenplatten 140 nicht in ihren jeweiligen Fahrwegen. Vorteilhaft können sich auf diese Weise die Haltevorrichtungen 150, 150' jeweils über eine Länge von mindestens 40%, bevorzugt mindestens 45%, am meisten bevorzugt mindestens 50% des gesamten Fahrweges (zwischen den zwei Endplatten 120' und den zwei Endplatten 120) bewegen.

Ebenso wie bei der rotierten Ausführungsform, kann es auch bei der Ausführungsform in Fig. 11 sinnvoll sein, eine Greiferplatte 190 vorzusehen, die lösbar mit der Wagenplatte 140 montiert ist.

Den Fördervorgang von Bandmaterial/einem Werkstück ist ähnlich zu demjenigen der Ausführungsform aus Fig. 10 zu verstehen. Es versteht sich jedoch, dass eine bewegliche Haltevorrichtung 150, 150' einen größeren Fahrweg ausführen kann. Somit geschieht die Führung des Materials sicherer und gleichmäßiger. Es wäre denkbar, die Wagenplatte 140 derart zu gestalten, dass die beweglichen Haltevorrichtungen 150, 150' sogar einen größeren Fahrweg als 50% des Abstands der Endplatten ausführen können. Dies ist jedoch nicht notwendig, da die Übergabe des Bandmaterials in etwa bei 50% des Abstands der Endplatten (50% der Vorschublänge) geschieht.

Bei dieser Ausführungsform in Fig. 11 bedarf es ebenso (wie bei der Ausführungsform mit zwei Antriebseinheiten in Fig. 10) keiner räumlich fixierten Haltevorrichtungen (wie sie bspw. in Fig. 9 angedeutet sind). Das Bandmaterial wird zumeist, vorzugsweise in jedem Zeitpunkt im Betrieb, von einer Zange gehalten, sodass eine räumlich fixierte Haltevorrichtung nicht notwendig ist.

Die Tragstrukturen können über eine Fläche von zumindest 10%, 20% oder mehr an den Rückseiten in Kontakt sein. Beispielsweise kann die Kontaktfläche 48.4% betragen (sofern z.B. lediglich ein Paar Seitentragmodule vorgesehen ist, 1 × L0 Tragstrukturlänge).

### Beispiele von Breitenvariationen

Bezüglich der folgenden Ausführungsformen gilt das zuvor Beschriebene, sofern dies technisch sinnvoll ist. Im Folgenden wird im Wesentlichen auf die Unterschiede eingegangen. Aus Übersichtsgründen sind in manchen Figuren nicht alle Bauteile gekennzeichnet, doch versteht der Fachmann welche Bauteile gemeint sind, zumindest unter Zuhilfenahme der anderen Figuren hierin.

**Fig. 12** zeigt Vorschübe 1, 1a, 1b unterschiedlicher Länge gemäß drei Ausführungsformen der vorliegenden Erfindung, wobei die Ausführungsformen ähnlich zur Fig. 8 sind. Gegenüber der Ausführungsform in Fig. 8 ist hierbei die Breite der Vorschübe verändert.

Der Vorschub 1 weist eine Länge von Lo (ein Paar Seitentragmodule 100) auf. Der Vorschub 1a weist eine Länge von 2×L0 (zwei Paar Seitentragmodule 100, 100a) auf. Der Vorschub 1b weist eine Länge von 3×L0 (drei Paar Seitentragmodule 100, 100a, 100b, lediglich 100b ist aus Übersichtsgründen gekennzeichnet) auf.

Die Durchlassbreite der Haltevorrichtungen 150, 150' beträgt in etwa 120 mm bis 190 mm, bevorzugt 130 mm bis 190 mm, ferner bevorzugt 140 mm bis 180 mm, am meisten bevorzugt 150 mm bis 170 mm oder gar 160 mm.

Die Breite B1 der Endplatte 220 (und der identischen Endplatte 220') beträgt in etwa 150 mm bis 300 mm, bevorzugt 170 mm bis 250 mm, ferner bevorzugt 180 mm bis 200 mm, am meisten bevorzugt 190 mm bis 195 mm, oder gar 192 mm. Diese Breite kann auch einer Installationsbreite der Vorschübe 1, 1a, 1b entsprechen. Es kann sein, dass die Montagefüße 125 seitlich etwas weiter über die Breite der Endplatte 220 hervorstehen.

Die verwendeten Seitentragmodule 100, 100a, 100b sind gleichartig, wie hierin beschrieben und entsprechen folglich denjenigen der vorherigen Ausführungsformen. Das Grundtragmodul 210 ist an die Verbreiterung angepasst, gleiches gilt für die Magnetschiene 160 und die Wagenplatten 140. Die Wagenplatten 140 der in Fig. 12 gezeigten drei Vorschübe 1, 1a, 1b sind gleichartig. Gleiches gilt für die Magnetschiene des Vorschubs 1 und der drei Magnetschienen 160, 160a, 160b des Vorschubs 1b. Dies wird durch den modularen Aufbau der Bauteile ermöglicht und reduziert die Kosten.

Die Magnetschiene 160 des Vorschubs 1a ist mehr als doppelt so lang wie die Magnetschiene 160 (deren Länge aufgrund der Gleichartigkeit derjenigen der Magnetschienen 160, 160a, 160b des Vorschubs 1b entspricht) des Vorschubs 1. Auf diese Weise kann im Vorschub 1a eine vergrößerte Überdeckung zwischen Antriebseinheit 170 und Magnetschiene 160 während des Betriebs des Vorschubs 1a erzielt werden. Die erfindungsgemäße Modularität ermöglicht es jedoch, dass, sofern gewünscht, im Vorschub 1a auch zwei gleichartige Magnetschienen 160, 160a zum Einsatz kommen.

Die Antriebseinheiten 170 sind ebenfalls in allen drei Vorschüben gleichartig und in allen drei Vorschüben 1, 1a, 1b kommt eine Antriebseinheit 170 zum Einsatz.

Hinsichtlich der Ausführungsformen von Vorschüben mit einer geringeren Breite, unterscheiden sich die Antriebseinheiten 170 lediglich in ihrer Breite.

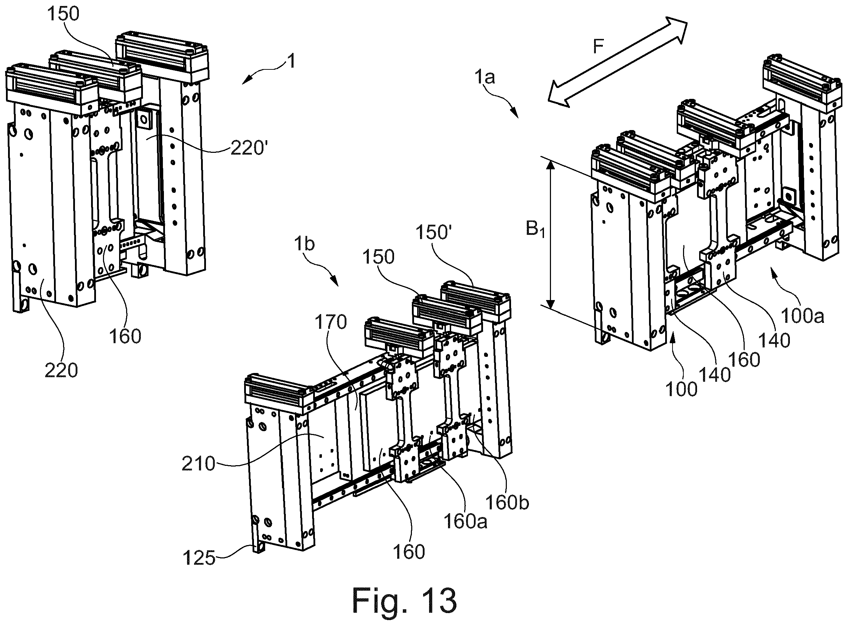

**Fig. 13** zeigt drei Vorschübe 1, 1a, 1b unterschiedlicher Länge gemäß drei rotierten Ausführungsformen der vorliegenden Erfindung, wobei die Ausführungsformen ähnlich zur Fig. 9 sind (entsprechend gilt das darin Beschriebene gleichfalls für Fig. 13), jedoch eine andere Höhe aufweisen. Die Breite B1 der Endplatte 120 der Ausführungsformen gemäß Fig. 12 entspricht in der rotierten Ausführungsform gemäß Fig. 13 einer Höhe, wie in Fig. 13 kenntlich gemacht.

Der Vorschub 1 weist eine Länge von Lo (ein Paar Seitentragmodule 100) auf. Der Vorschub 1a weist eine Länge von 2×Lo (zwei Paar Seitentragmodule 100, 100a) auf. Der Vorschub 1b weist eine Länge von 3×Lo (drei Paar Seitentragmodule 100, 100a, 100b). Aufgrund der Modularität können im Wesentlichen die gleichen Bauteile wie in Fig. 12 zum Einsatz.

In den drei Vorschüben 1, 1a, 1b gemäß Fig. 13 beträgt die Durchlassbreite der Haltevorrichtungen 150, 150' in etwa 60 mm bis 120 mm, bevorzugt 65 mm bis 95 mm, ferner bevorzugt 70 mm bis 90 mm, am meisten bevorzugt 75 mm bis 85 mm oder gar 80 mm.

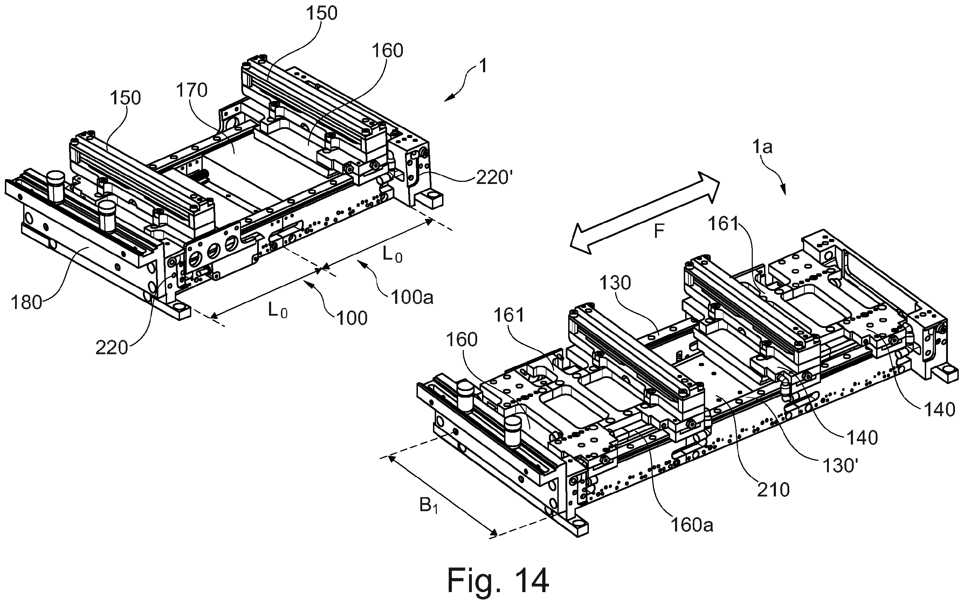

**Fig. 14** zeigt zwei Vorschübe 1, 1a unterschiedlicher Länge gemäß zwei Ausführungsformen der vorliegenden Erfindung, wobei die Ausführungsformen ähnlich zur Fig. 10 sind (entsprechend gilt das darin Beschriebene gleichfalls für Fig. 14), jedoch eine andere Breite aufweisen. Die Breite B1 der Endplatte 120 der Ausführungsformen gemäß Fig. 14 entspricht derjenigen aus Fig. 12 (entsprechend gilt das darin Beschriebene gleichfalls für Fig. 14).

Der Vorschub 1 weist eine Länge von 2×Lo (zwei Paar Seitentragmodule 100, 100a) auf. Der Vorschub 1a weist eine Länge von 3×Lo (drei Paar Seitentragmodule 100, 100a, 100b, aus Übersichtsgründen nicht gesondert gekennzeichnet) auf.

Der Vorschub 1 in Fig. 14 umfasst zu beiden Seiten je eine Magnetplatte 160.

Der Vorschub 1a in Fig. 14 umfasst zu beiden Seiten je zwei Magnetplatten 160, 160a (ebenfalls gleichartig) und weist ein Verbindungselement 161 zwischen den gleichartigen Wagenplatten 140 auf. Das Verbindungselement 161 kann als Abstandshalter zwischen den Wagenplatten 140 dienen. Zudem kann das Verbindungselement 161 die zwei Magnetschienen 160 und 160a miteinander lösbar montieren. Auf diese Weise können die gleichen Magnetplatten 160, 160a verwendet werden und es muss keine längere Magnetplatte verwendet werden. Insbesondere entsprechen die Magnetplatten der Vorschübe 1, 1a denjenigen Magnetplatten der Vorschübe 1, 1b aus Fig. 13 und der Vorschübe 1, 1b aus Fig. 12.

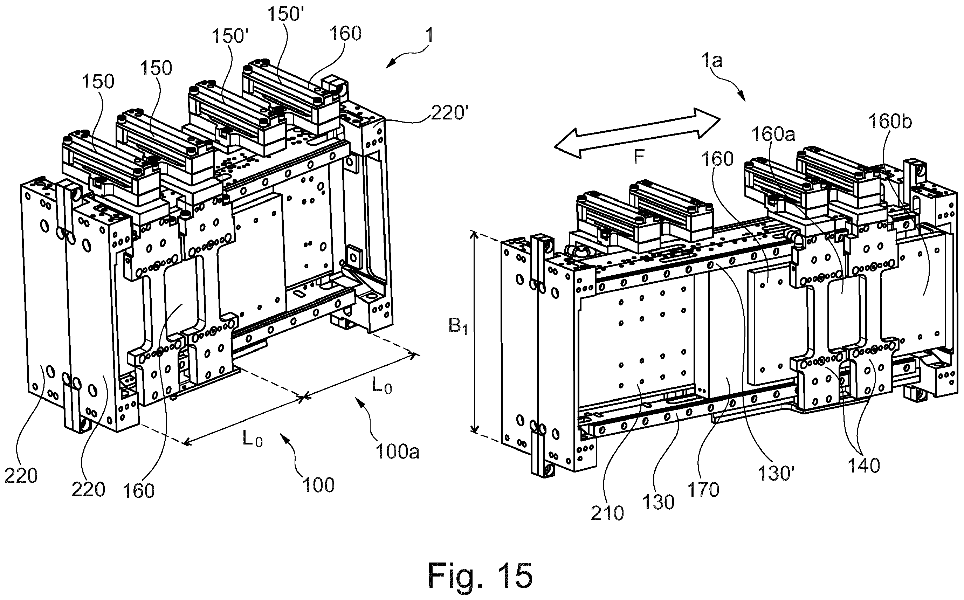

**Fig. 15** zeigt zwei Vorschübe 1, 1a unterschiedlicher Länge gemäß zwei Ausführungsformen der vorliegenden Erfindung, wobei die Ausführungsformen ähnlich zur Fig. 11 sind (entsprechend gilt das darin Beschriebene gleichfalls für Fig. 15), jedoch eine andere Breite aufweisen. Die Breite B1 der Endplatte 120 der Ausführungsformen gemäß Fig. 15 entspricht derjenigen aus Fig. 12 (entsprechend gilt das darin Beschriebene gleichfalls für Fig. 15). Wie hierin beschrieben, bilden zwei rückseitig aneinander angeordneten und lösbar miteinander montierten Vorschübe jeweils den Vorschub 1 und den Vorschub 1a.

Der Vorschub 1 weist eine Länge von 2×Lo (zwei Paar Seitentragmodule 100, 100a) auf. Der Vorschub 1a weist eine Länge von 3×Lo (drei Paar Seitentragmodule 100, 100a, 100b, aus Übersichtsgründen nicht gesondert gekennzeichnet) auf.

Die Beabstandung der Wagenplatten 140 in Förderrichtung F kann aufgrund der universellen Montagemittel der Wagenplatten 140 und der Magnetschienen 160, 160a, 160b (alle gleichartig) variabel gestaltet werden. Folglich kann der Vorschub 1, 1a auf vielfältige Vorschubanwendungen angepasst werden. Die Haltevorrichtungen 150, 150' sind über Greiferplatten lösbar mit den Wagenplatten 140 auf gleicher axialen (entlang der Förderrichtung F) Höhe wie die Wagenplatten 140 montiert. Folglich bedingt eine veränderte Beabstandung der Wagenplatten 140 eine veränderte Beabstandung der Haltevorrichtungen 150, 150'. Somit kann der Abstand zwischen zwei in gleichen Richtungen beweglichen Haltevorrichtungen 150, 150' variabel, je nach gewünschter/erlaubter/zulässiger Durchhängung von Bandmaterial eingestellt werden.

Im Unterschied zur Ausführungsform aus Fig. 14, ist in Fig. 15 beispielhaft eine aneinander angrenzende Anordnung der Wagenplatten 140 gezeigt. Somit ist kein Verbindungselement 161 (in Fig. 14 dargestellt) erforderlich, da sich die Wagenplatten 140 über alle drei Magnetplatten in Förderrichtung 160, 160a, 160b zumindest zum Teil erstrecken (über weniger als in etwa die Hälfte der Magnetplatte 160, über die gesamte Magnetplatte 160a und über weniger als in etwa die Hälfte der Magnetplatte 160b). Mithin ist eine lösbare Montage aller drei Magnetplatten 160, 160a, 160b mittels der zwei Wagenplatten 140 ermöglicht.

Wie auch in Fig. 12 und 13 dargestellt ist die Magnetschiene 160 des Vorschubs 1 mehr als doppelt so lang wie die Magnetschiene 160 (deren Länge aufgrund der Gleichartigkeit derjenigen der Magnetschiene 160a und 160b entspricht) des Vorschubs 1a. Auf diese Weise kann im Vorschub 1 eine vergrößerte Überdeckung zwischen Antriebseinheit 170 und Magnetschiene 160 während des Betriebs des Vorschubs 1 erzielt werden. Die erfindungsgemäße Modularität ermöglicht es jedoch, dass, sofern gewünscht, im Vorschub 1 auch zwei gleichartige Magnetschienen 160, 160a zum Einsatz kommen.

Es versteht sich, dass die gleichartigen Magnetplatten 160, 160a, 160a des Vorschubs 1a denjenigen Magnetplatten der Vorschübe 1, 1b aus Fig. 14, der Vorschübe 1, 1b aus Fig. 13 und der Vorschübe 1, 1b aus Fig. 12. Die Wagenplatten 140 sind in allen Vorschüben einer Breite gleichartig.

### Übersicht einiger Ausführungsformen

Ein Teil der verwendeten Bauteile der vorstehend beschriebenen Ausführungsformen sind in folgender Tabelle 1 als Beispiele gekennzeichnet. Dabei steht die Ausführungsform "L" für liegende Ausführungsformen (vgl. in Fig. 8 und 12).

"R" steht für Ausführungsformen, bei denen eine Längsachse der Haltevorrichtung im Wesentlichen parallel zur Normalen der Wagenplatte verläuft (vgl. in Fig. 9 und 13).

"T" steht für Ausführungsformen, bei denen die Fördermodule in Förderrichtung unabhängig voneinander bewegbar auf der Tragstruktur angeordnet sind (vgl. in Fig. 10 und 14).

"X" steht für Ausführungsformen, bei denen die Fördermodule so eingerichtet sind, dass sie sich in Förderrichtung zumindest zum Teil überlappen können (vgl. in Fig. 11 und 15).

"A" kennzeichnet beispielsweise ein Seitentragmodul des Typs A (alle Seitentragmodule des Typs A sind somit identisch). "B" kennzeichnet eine andere Beschaffenheit gegenüber "A", beispielsweise ist das Grundtragmodul B doppelt so lang wie das Grundtragmodul A. Die Kennzeichnung "A^{∗}" bedeutet beispielsweise, dass sich das Grundtragmodul A^{∗} lediglich in der Beschaffenheit der Breite von dem Grundtragmodul A unterscheidet. Die Kennzeichnung "A^{∗∗}" bedeutet beispielsweise, dass sich die Zange A^{∗∗} lediglich in der Beschaffenheit der Breite von der Zange A und von der Zange A^{∗} unterscheidet. Die Kennzeichnung "160/240" bedeutet beispielsweise, dass die Zangendurchlassbreite einen Wert von 160 mm oder 240 mm betragen kann.

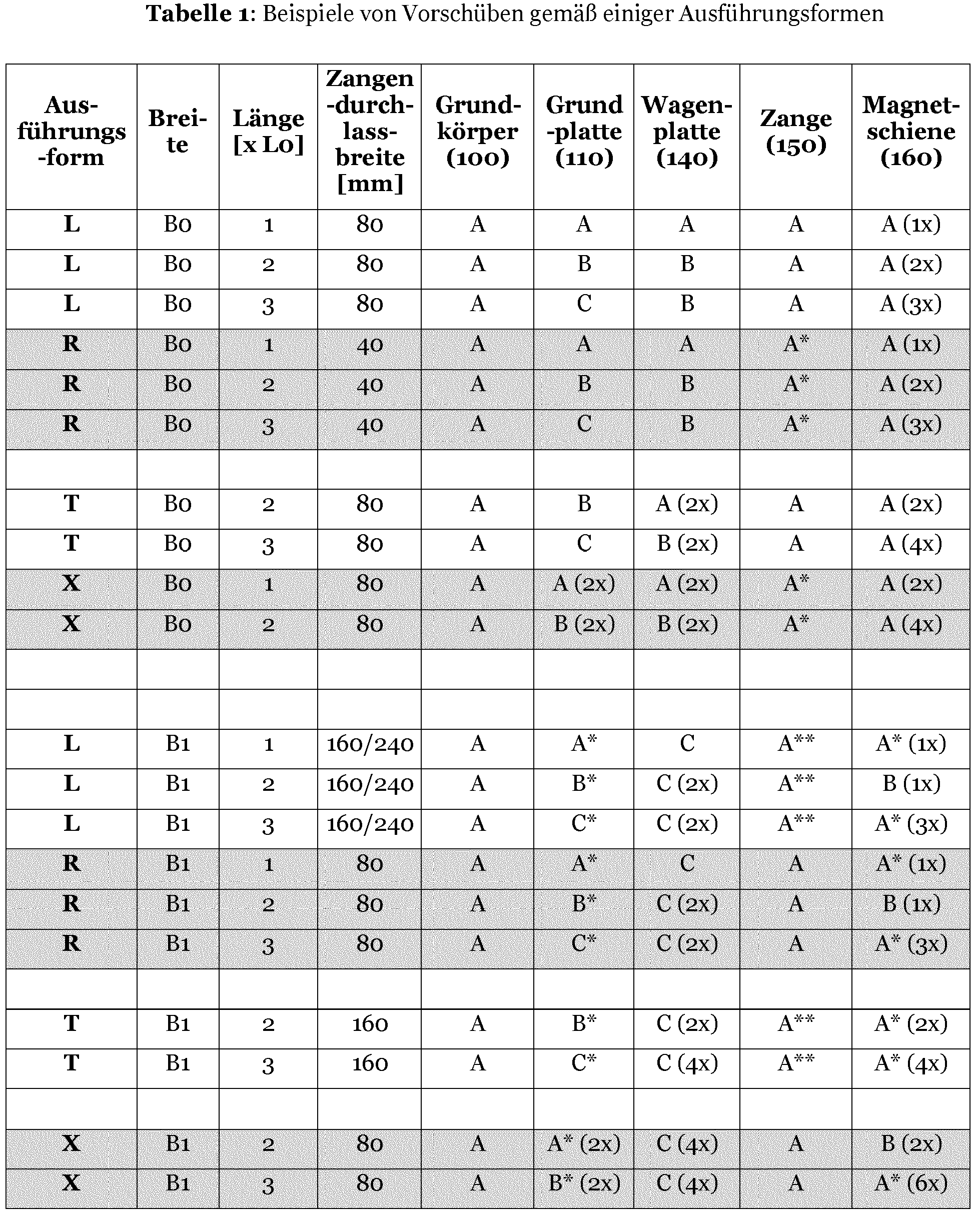

Auch wenn nicht gesondert gekennzeichnet, versteht es sich, dass in allen hierin beschriebenen Ausführungsbeispielen die Seitentragmodule 105, 105' gleichartig ausgebildet sein können.

Außerdem können in den zuvor beschriebenen Ausführungsbeispielen die Vorschübe auch als Zangenvorschübe bezeichnet werden. Ferner können, in den zuvor beschriebenen Ausführungsbeispielen, Bandmaterialien mit einer Dicke von mindestens 0.05 mm und/oder maximal 20 mm gefördert werden. Vorzugsweise können Bandmaterialien von einer Dicke von 0.05 bis 15 mm, weiter bevorzugt von 0.05 mm bis 10 mm, weiter bevorzugt von 0.05 mm bis 8 mm, am meisten bevorzugt von 0.1 mm bis 5 mm gefördert werden. Es können Anpassungen an den Haltevorrichtungen vorgesehen werden, um dickere/dünnere Bandmaterialien zu fördern.

In den zuvor beschrieben Ausführungsbeispielen umfassen die Bauteile vorzugsweise Metalle als Bauteilmaterialien. Die Materialien des/der Grundtragmoduls/e, Seitentragmoduls/e und/oder Endplatten sind vorzugsweise Aluminium, das in manchen Fällen auch eloxiert sein kann. Die Haltevorrichtungen umfassen ebenso Aluminium, dies sorgt für eine geringe Masse und begünstigt höhere Taktraten. Die Haltevorrichtungen umfassen ebenso Stahl für Klemmplatten der Haltevorrichtungen, wobei die Klemmplatten mit dem Bandmaterial in Kontakt kommen.

Der Schutzumfang wird durch die Patentansprüche bestimmt und ist nicht durch die Ausführungsbeispiele und/oder Figuren beschränkt.

### 6. Liste der Bezugszeichen

- 1p: Stand der Technik: Vorschub
- 100p: Stand der Technik: Grundkörper/Tragstruktur
- 120p, 120p': Stand der Technik: Endplatte
- 130p: Stand der Technik: Führungsschiene (der Wagenplatte)
- 140p: Stand der Technik: Wagenplatte
- 150p: Stand der Technik: Haltevorrichtung (Zange)
- 180p: Stand der Technik: Auflageplatte (für das Werkstück)
- 181p, 181p': Stand der Technik: Führungsrolle
- 185: Stand der Technik: Rollenkorb

- 1, 1a, 1b, 1c: Vorschub, insbesondere Zangenvorschub
- 100: (erstes) Paar Seitentragmodule
- 100a: (zweites) Paar Seitentragmodule
- 100b: (drittes) Paar Seitentragmodule
- 103: erste Montagemittel des Seitentragmoduls
- 103a: zweite Montagemittel des Seitentragmoduls
- 103b: dritte Montagemittel des Seitentragmoduls
- 104, 104a: U-förmige Aussparung des Seitentragmoduls
- 105: Seitentragmodul
- 105': Seitentragmodul
- 106, 106': Stirnfläche des Seitentragmoduls
- 107, 107': Seitenfläche des Seitentragmoduls
- 108: Gewindebohrungen des Seitentragmoduls
- 110: Grundtragmodul
- 111, 111': Seitenfläche des Grundtragmoduls
- 112: erste Montagemittel des Grundtragmoduls
- 112a: zweite Montagemittel des Grundtragmoduls
- 115: U-förmige Tragstruktur
- 120, 120': Endplatte
- 121, 121': Stirnfläche der Endplatte
- 122: Aussparung der Endplatte
- 125: Montagefuß
- 126: seitliche Abdeckplatte
- 127: obere Abdeckplatte (Abdeckhaube)
- 130, 130': Führungsschiene
- 140, 140': Wagenplatte
- 150, 150': Haltevorrichtung
- 160: Magnetschiene
- 160': Magnetschiene
- 160a: Magnetschiene
- 160b: Magnetschiene
- 161: Verbindungselement
- 170, 170': Antriebseinheit (Linearmotor)
- 180: Auflageplatte (für das Werkstück)
- 181, 181': Führungsrolle
- 190: Greiferplatte

- 210: Grundtragmodul (andere Breite)
- 220, 220': Endplatte (andere Breite)
- 280: Auflageplatte (für das Werkstück) (andere Breite)

- F: Förderrichtung des Bandmaterials
- Lo: Länge des Paars Seitentragmodule/eines Seitentragmoduls
- Bo: Breite der Endplatte
- B1: Breite der Endplatte
- S: Ebene durch eine Längsachse des Vorschubs

## Patentansprüche

1. Vorschub zur Förderung von einem Werkstück, insbesondere Bandmaterial, in einer Förderrichtung, umfassend:
mindestens ein erstes Paar Seitentragmodule;
ein Grundtragmodul, das zwischen den Seitentragmodulen angeordnet ist; und
mindestens ein Fördermodul;
wobei die Seitentragmodule mit dem Grundtragmodul quer zur Förderrichtung lösbar verbunden sind, um eine U-förmige Tragstruktur des Vorschubs entlang der Förderrichtung auszubilden;
wobei das Fördermodul in Förderrichtung bewegbar auf der Tragstruktur angeordnet ist.

2. Der Vorschub nach dem vorhergehenden Anspruch, wobei die Seitentragmodule gegeneinander austauschbar mit dem Grundtragmodul lösbar verbunden werden können.

3. Der Vorschub nach einem der vorhergehenden Ansprüche, wobei der Vorschub so eingerichtet ist, dass das Fördermodul bei einem gegenseitigen Austausch der Seitentragmodule weiterhin in Förderrichtung bewegbar auf der Tragstruktur angeordnet werden kann.

4. Der Vorschub nach einem der vorhergehenden Ansprüche, wobei die Seitentragmodule Stirnflächen aufweisen, die so eingerichtet sind, dass ein weiteres Paar gleichartiger Seitentragmodule in Förderrichtung an das erste Paar Seitentragmodule so angeordnet werden kann, dass die Länge der Tragstruktur um die Länge eines Seitentragemodul verlängert wird, wenn das Grundtragmodul durch ein verlängertes Grundtragmodul ersetzt wird, dessen Länge um die Länge eines Seitentragmoduls größer ist als die Länge des Grundtragmoduls.

5. Der Vorschub nach dem vorhergehenden Anspruch, wobei der Vorschub so eingerichtet ist, dass bei einer Anordnung eines weiteres Paars gleichartiger Seitentragmodule in Förderrichtung das Fördermodul weiterhin in Förderrichtung bewegbar auf der Tragstruktur angeordnet werden kann.

6. Der Vorschub nach einem der Ansprüche 4 oder 5, wobei die Seitentragmodule und das Grundtragmodul so eingerichtet sind, dass bei einer Anordnung eines weiteres Paars gleichartiger Seitentragmodule in Förderrichtung die weiteren gleichartigen Seitentragmodule mit dem verlängerten Grundtragmodul quer zur Förderrichtung lösbar verbunden werden können, um die Tragstruktur des Vorschubs entlang der Förderrichtung ausbilden zu können.

7. Der Vorschub nach einem der Ansprüche 4 bis 6, wobei die Stirnflächen der Seitentragmodule Aussparungen, vorzugsweise U-förmige Aussparungen aufweisen, wobei bei einer Anordnung eines weiteres Paars gleichartiger Seitentragmodule, die Aussparungen eine gemeinsame Öffnung bilden mit einer im Wesentlichen kontinuierlichen Umfangsfläche.

8. Der Vorschub nach einem der Ansprüche 4 bis 7, wobei die Stirnflächen der Seitentragmodule zweite Montagemittel aufweisen, die so eingerichtet sind, dass die Seitentragmodule mit einer Endplatte des Vorschubs lösbar verbunden werden können.

9. Der Vorschub nach einem der vorhergehenden Ansprüche, wobei die Seitentragmodule länglich sind und im Wesentlichen ein U-förmiges Profil mit unterschiedlich langen Schenkeln definieren, wobei der kleinere Schenkel jedes Seitentragmoduls im Wesentlichen bündig mit dem Grundtragmodul abschließt.

10. Der Vorschub nach einem der vorhergehenden Ansprüche, ferner umfassend eine Führungsschiene, die auf der Tragstruktur angeordnet ist, und wobei die Seitentragmodule dritte Montagemittel aufweisen, um die Führungsschiene lösbar mit einem Seitentragmodul zu verbinden,
wobei, optional, die Führungsschiene und die dritten Montagemittel der Seitentragmodule so eingerichtet sind, dass die Führungsschiene gleichzeitig mit mehreren in Förderrichtung angeordneten Seitentragmodulen lösbar verbunden werden kann.

11. Der Vorschub nach einem der vorhergehenden Ansprüche, wobei das Grundtragmodul zweite Montagemittel aufweist, die paarweise entlang der Förderrichtung angeordnet sind,
wobei der Vorschub zumindest eine Antriebseinheit umfasst, die in der Tragstruktur aufgenommen ist und dazu eingerichtet ist, das Fördermodul zu bewegen, wobei die zweiten Montagemittel des Grundtragmoduls so angeordnet sind, dass die Antriebseinheit entlang der Förderrichtung an variablen Positionen mit dem Grundtragmodul lösbar verbunden werden kann.

12. Der Vorschub nach einem der vorhergehenden Ansprüche, ferner umfassend zwei Endplatten, die an gegenüberliegenden Seiten der Tragstruktur lösbar mit der Tragstruktur, vorzugsweise mit den Seitentragmodulen und optional nicht mit dem Grundtragmodul, verbunden sind.

13. Der Vorschub nach dem vorhergehenden Anspruch, wobei die Endplatten so eingerichtet sind, dass die Endplatten gegeneinander austauschbar mit der Tragstruktur lösbar verbunden werden können,
wobei, optional, der Vorschub so eingerichtet ist, dass das Fördermodul bei einem gegenseitigen Austausch der Endplatten weiterhin in Förderrichtung bewegbar auf der Tragstruktur angeordnet werden kann.

14. Der Vorschub nach einem der vorhergehenden Ansprüche, wobei die Länge des Grundtragmoduls in Förderrichtung der Länge des ersten Paars oder der Paare an Seitentragmodulen entspricht.

15. Der Vorschub nach einem der vorhergehenden Ansprüche, ferner umfassend ein oder mehrere weitere Paare gleichartiger Seitentragmodule, wobei die Paare Seitentragmodule in Förderrichtung aneinander angeordnet sind, wobei die Seitentragmodule mit dem Grundtragmodul quer zur Förderrichtung lösbar verbunden sind, um die Tragstruktur des Vorschubs entlang der Förderrichtung auszubilden.
